# EUROPÄISCHE PATENTSCHRIFT

(11) **EP 3 292 950 B1**
(45) Veröffentlichungstag und Bekanntmachung des Hinweises auf die Patenterteilung: **24.08.2022**
(21) Anmeldenummer: 17190615.9
(22) Anmeldetag: 12.09.2017
(51) Int. Cl.: B23Q 3/157, B24B 55/02, B23Q 11/10

(54) **KÜHLMITTELZUFUHREINRICHTUNG UND SCHLEIFWERKZEUG MIT EINER KÜHLMITTELZUFUHREINRICHTUNG FÜR EINE WERKZEUGMASCHINE**
COOLANT SUPPLY DEVICE AND GRINDING TOOL WITH A COOLANT SUPPLY DEVICE FOR A MACHINE TOOL
SYSTÈME D'AMENÉE D'AGENT DE REFROIDISSEMENT ET OUTIL À RECTIFIER DOTÉ D'UN SYSTÈME D'AMENÉE D'AGENT DE REFROIDISSEMENT POUR UNE MACHINE-OUTIL

(30) Priorität: 12.09.2016 DE 102016217344
(43) Veröffentlichungstag der Anmeldung: 14.03.2018
(73) Patentinhaber: DECKEL MAHO Pfronten GmbH, 87459 Pfronten (DE)
(72) Erfinder: JUNG, Robert, 87459 Pfronten (DE); LAU, Florian, 87459 Pfronten (DE)
(74) Vertreter: MERH-IP Matias Erny Reichl Hoffmann Patentanwälte PartG mbB

(56) Entgegenhaltungen:
- EP-A1- 0 305 616
- EP-A1- 2 439 017
- DE-A1- 19 844 242
- JP-A- H07 314 273

## Beschreibung

### Beschreibung

Die vorliegende Erfindung betrifft eine wechselbare Kühlmittelzufuhreinrichtung und ein Schleifwerkzeug mit einer derartigen Kühlmittelzufuhreinrichtung für eine Werkzeugmaschine mit werkzeugtragender Arbeitsspindel, insbesondere eine Fräsmaschine.

### Hintergrund

Beim Schleifen von Werkstücken ist es erforderlich, an der Schleifstelle ausreichend Kühlmittel zur Verfügung zu stellen. Bei Schleifmaschinen (d.h. speziell für Schleifbearbeitung eingerichtete Werkzeugmaschinen) werden aufwendige Rohrkonstruktionen vorgesehen, durch welche das Kühlmittel an der gewünschten Position zugeführt werden kann. Dies wir bei bisher bekannten Verfahren an Spezialmaschinen, sog. Schleifmaschinen, durchgeführt. Neuerderdings gibt es Bestrebungen, Schleifbearbeitungen an Universal-Werkzeugmaschinen, Fräs-/Drehmaschinen, Bearbeitungszentren bzw. Fräsmaschinen durchzuführen, bei denen neben gängigen Fräs-/Bohrwerkzeugen auch Schleifwerkzeuge eingewechselt und an werkzeugtragenden Arbeitsspindeln der Universal-Werkzeugmaschinen, Fräs-/Drehmaschinen, Bearbeitungszentren bzw. Fräsmaschinen aufgenommen werden können. Beim Schleifen mit Schleifwerkzeugen auf Universal-Werkzeugmaschinen, Fräs-/Drehmaschinen, Bearbeitungszentren bzw. Fräsmaschinen ist die Standardkühlmittelzufuhr jedoch üblicherweise nicht auf eine Schleifstelle ausrichtbar, da sie z.B. für herkömmliche Fräsbearbeitung unverändert zur Verfügung stehen muss.

Zur Zufuhr von Kühlschmierstoff zu Schleifwerkzeugen bei Benutzung an einer Werkzeugmaschine, wie z.B. einer Universal-Werkzeugmaschine, einer Fräs-/Drehmaschine, eines Bearbeitungszentrums bzw. einer Fräsmaschine, gibt es im bislang keine zufriedenstellenden Lösungen.

EP 0 305 616 A1 offenbart ein weiteres Bearbeitungszentrum mit einer Kühlmittelzufuhreinrichtung für ein Schleifwerkzeug mit
- einem Grundkörper, der zumindest zwei Eingreifabschnitte umfasst,
- einer an dem Grundkörper angeordneten Leitungseinheit mit zumindest einer Abgabeöffnung zur Abgabe von Kühlmittel an einen vorbestimmbaren Bearbeitungsbereich an dem Schleifwerkzeug, wobei die Kühlmittelzufuhreinrichtung über die Eingreifabschnitte an einem Anschlussring der Arbeitsspindel fixierbar ist, wenn das Schleifwerkzeug an der Arbeitsspindel aufgenommen ist.

Es ist eine Aufgabe der vorliegenden Erfindung, eine Kühlmittelzufuhreinrichtung und ein Schleifwerkzeug mit einer Kühlmittelzufuhreinrichtung für eine Werkzeugmaschine (insbesondere mit werkzeugtragender Arbeitsspindel) bereitzustellen, welche einen einfachen Aufbau aufweist und eine verbesserte Kühlung ermöglicht. Insbesondere soll die Zufuhr des Kühlmittels aus dem Kühlmittelsystem der Werkzeugmaschine zum Bearbeitungsbereich des Schleifwerkzeugs verbessert werden.

Weiterhin ist es eine Aufgabe der vorliegenden Erfindung, eine Kühlmittelzufuhreinrichtung und ein Schleifwerkzeug mit einer Kühlmittelzufuhreinrichtung für eine Werkzeugmaschine (insbesondere mit werkzeugtragender Arbeitsspindel) bereitzustellen, welche es auf einfache Weise flexibel und präzise ermöglicht, das Schleifwerkzeug z.B. an Universal-Werkzeugmaschinen, Fräs-/Drehmaschinen, Bearbeitungszentren bzw. Fräsmaschinen mit werkzeugtragender Arbeitsspindel einzusetzen, wobei einerseits einfache, effiziente und zuverlässige Ein-/Auswechselvorgänge an der Arbeitsspindel durchführbar sind, insbesondere mit automatischen Werkzeugwechselvorrichtungen an der Werkzeugmaschine, und zudem eine zuverlässige, gut positionierbare und einfach handhabbare Kühlmittelzufuhr ermöglicht ist.

### Zusammenfassung der Erfindung

Zur Lösung der vorstehend genannten Aufgaben werden die Gegenstände der unabhängigen Patentansprüche vorgeschlagen. Die abhängigen Ansprüche betreffen vorteilhafte Ausführungsbeispiele der Erfindung.

Die Kühlmittelzufuhreinrichtung für ein Schleifwerkzeug einer Werkzeugmaschine, insbesondere mit werkzeugtragender Arbeitsspindel, wie z.B. einer Universal-Werkzeugmaschine, einer Fräs-/Drehmaschine, eines Bearbeitungszentrums bzw. einer Fräsmaschine, ist mit einem Grundkörper der zumindest eine Eingreifbohrung bzw. zumindest einen Eingreifabschnitt umfassen kann, ausgestattet.

Zudem kann eine mit dem Grundkörper in Verbindung stehende Leitungseinheit mit einem Kühlmitteleinlass und zumindest einer Abgabeöffnung zur Abgabe von Kühlmittel an einen vorbestimmbaren Bearbeitungsbereich vorgesehen sein. Die Kühlmittelzufuhreinrichtung kann ein Spannmittel zum lösbaren Fixieren der Kühlmittelzufuhreinrichtung an einem Schaft des Schleifwerkzeugs aufweisen, wobei die Kühlmittelzufuhreinrichtung über die Eingreifbohrung bzw. den Eingreifabschnitt an der Werkzeugmaschine fixierbar ist.

Dadurch ist es möglich auf einfache Weise eine Kühlmittelzufuhr für ein Schleifwerkzeug einer Universalwerkzeugmaschine bereitzustellen, wodurch das Kühlschmiermittel effizient und kostengünstig an die Schleifstelle im Schleifbereich befördert werden kann.

Insbesondere wird eine Kühlmittelzufuhreinrichtung für ein Schleifwerkzeug zum Einsatz an einer Werkzeugmaschine mit werkzeugtragender Arbeitsspindel vorgeschlagen, mit einem Grundkörper, der zumindest einen Eingreifabschnitt umfasst, einer an dem Grundkörper angeordneten Leitungseinheit mit zumindest einer Abgabeöffnung zur Abgabe von Kühlmittel an einen vorbestimmbaren Bearbeitungsbereich an dem Schleifwerkzeug, und eine Spanneinrichtung zum lösbaren Anbringen der Kühlmittelzufuhreinrichtung an dem Schleifwerkzeug.

Hierbei ist die Kühlmittelzufuhreinrichtung zweckmäßigerweise über den Eingreifabschnitt bzw. bevorzugt mehrere Eingreifabschnitte an einem Anschlussring der Arbeitsspindel der Werkzeugmaschine fixierbar, insbesondere wenn das Schleifwerkzeug an der Arbeitsspindel der Werkzeugmaschine aufgenommen ist.

In bevorzugten Ausführungsbeispielen weist die Leitungseinheit einen Kühlmitteleinlass auf, der mit einer an dem Anschlussring der Arbeitsspindel der Werkzeugmaschine angeordneten Andockeinrichtung zur Zuführung von Kühlmittel andockbar ist, insbesondere wenn die Kühlmittelzufuhreinrichtung über den Eingreifabschnitt an dem Anschlussring der Arbeitsspindel der Werkzeugmaschine fixiert ist.

In bevorzugten Ausführungsbeispielen ist die Spanneinrichtung dazu eingerichtet, die Kühlmittelzufuhreinrichtung an dem Schleifwerkzeug zu fixieren, bevor die Kühlmittelzufuhreinrichtung über den Eingreifabschnitt an dem Anschlussring der Arbeitsspindel der Werkzeugmaschine fixiert wird bzw. wenn die Kühlmittelzufuhreinrichtung nicht über den Eingreifabschnitt an dem Anschlussring der Arbeitsspindel der Werkzeugmaschine fixiert ist.

In bevorzugten Ausführungsbeispielen ist die Spanneinrichtung dazu eingerichtet, die Kühlmittelzufuhreinrichtung aus der Fixierung mit dem Schleifwerkzeug zu lösen, wenn die Kühlmittelzufuhreinrichtung über den Eingreifabschnitt an dem Anschlussring der Arbeitsspindel der Werkzeugmaschine fixiert ist.

Erfindungsgemäß ist, in dem Zustand, in dem die Kühlmittelzufuhreinrichtung über den Eingreifabschnitt an dem Anschlussring der Arbeitsspindel der Werkzeugmaschine fixiert ist und die Leitungseinheit zur Zuführung von Kühlmittel an dem Anschlussring der Arbeitsspindel der Werkzeugmaschine angedockt ist, ein Spalt zwischen der Kühlmittelzufuhreinrichtung, insbesondere der Spanneinrichtung, und dem Schleifwerkzeug eingestellt, bevorzugt insbesondere derart, dass das von der Arbeitsspindel rotatorisch angetriebene Schleifwerkzeug ohne Kontakt zur ortsfest an dem Anschlussring der Arbeitsspindel der Werkzeugmaschine fixierten Kühlmittelzufuhreinrichtung dreht bzw. drehen kann.

Das Spannmittel bzw. die Spanneinrichtung der Kühlmittelzufuhreinrichtung kann einen Schieber und ein Schubmittel (Andockelement) umfassen, wobei zum Fixieren der Kühlmittelzufuhreinrichtung an dem Schleifwerkzeug, der Schieber in einer ersten Stellung in eine erste Nut des Schleifwerkzeugs, insbesondere in eine erste Nut der Werkzeugschnittstelle des Schleifwerkzeugs, eingreifen kann und zum Lösen der Kühlmittelzufuhreinrichtung, der Schieber in einer zweiten Stellung aus der Nut austreten kann, so dass eine Relativbewegung des Schleifwerkzeugs zur Kühlmittelzufuhreinrichtung ermöglicht ist.

Durch diesen Mechanismus ist es vorteilhaft möglich, auf einfache und effiziente Weise die Kühlmittelzufuhreinrichtung am Schleifwerkzeug zu befestigen, wobei durch Verschiebung des Schiebers das Schleifwerkzeug frei drehen kann und bei Blockierung in der Nut durch den Schieber das Schleifwerkzeug zusammen mit der Kühlmittelzufuhreinrichtung ausgespannt/eingespannt werden kann und/oder in ein Magazin der Werkzeugmaschine bewegt werden kann.

Bevorzugt ist die Werkzeugmaschine eine Fräsmaschine, sodass es möglich ist Werkstücke nicht nur mit Fräsbearbeitungsschritten zu bearbeiten, sondern durch Einwechseln des Schleifwerkzeugs auch ein Schleifen ermöglicht wird, wobei das Werkstück nicht ausgespannt werden muss, um in einer Schleifmaschine bearbeitet zu werden. Die gesamte Bearbeitung mit Fräs- und Schleifbearbeitungsschritten kann somit in einer Werkstückaufspannung an der Fräsmaschine erfolgen.

Das Schubmittel (Andockelement) der Kühlmittelzufuhreinrichtung kann vorteilhaft ein Stößel sein und das Spannmittel (Spanneinrichtung) kann bevorzugt eine Feder umfassen, welche mit dem Schieber und dem Stößel in Wirkverbindung steht.

Der Grundkörper der Kühlmittelzufuhreinrichtung kann zumindest zwei Eingreifbohrungen bzw. Eingreifabschnitte aufweisen, und die Eingreifbohrungen bzw. Eingreifabschnitte sind derart ausgestaltet sein, dass die Kühlmittelzufuhreinrichtung an dem Anschlussring der Arbeitsspindel (z.B. an einem Fräskopf) der Werkzeugmaschine über Spannelemente in den Eingreifbohrungen bzw. Eingreifabschnitten fixierbar ist, insbesondere ortsfest fixierbar ist. Dadurch ist es auf einfache Weise möglich ein Kombinationswerkzeug aus Schleifwerkzeug und Kühlmittelzufuhreinrichtung zusammen an der Fräsmaschine einzuspannen.

Der Grundkörper der Kühlmittelzufuhreinrichtung kann vorteilhaft ein zentrales Durchgangsloch aufweisen zur Aufnahme des Schafts bzw. der Werkzeugschnittstelle des Schleifwerkzeugs an der Kühlmittelzufuhreinrichtung.

Die Kühlmittelzufuhreinrichtung kann ein Kopplungsmittel (Kopplungseinrichtung) zum Koppeln der Kühlmittelzufuhreinrichtung an einen Kühlmittelkreis der Werkzeugmaschine aufweisen (insbesondere bevorzugt eine mechanisch steuerbare, elektrisch steuerbare, hydraulisch steuerbare und/oder pneumatisch steuerbare Kopplungseinrichtung). Das Kopplungsmittel (Kopplungseinrichtung) ermöglicht somit den Zugriff auf das Kühlmittelsystem der Werkzeugmaschine.

Bevorzugt ist das Kopplungsmittel bzw. die Kopplungseinrichtung dazu eingerichtet, mit der Andockeinrichtung an dem Anschlussring der Arbeitsspindel der Werkzeugmaschine zu koppeln, insbesondere derart, dass über die Kopplung der Kopplungseinrichtung mit der Andockeinrichtung dem Kühlmitteleinlass der Leitungseinheit Kühlmittel aus dem Kühlmittelkreis des Anschlussrings der Arbeitsspindel zuführbar ist.

Das Kopplungsmittel (Kopplungseinrichtung) der Kühlmittelzufuhreinrichtung kann vorteilhaft einen Andockzylinder umfassen, der den Kühlmitteleinlass zumindest teilweise umgibt.

Ein Schleifwerkzeug für eine Werkzeugmaschine, insbesondere einer Fräsmaschine bzw. Werkzeugmaschine mit werkzeugtragender Arbeitsspindel, kann einen Schaft, einem am Schaft vorgesehenen Schleifkörper und einer am Schaft angeordneten Kühlmittelzufuhreinrichtung aufweisen. Dieses Kombinationswerkzeug ermöglicht es ein Schleifwerkzeug mit Kühlvorrichtung bereitzustellen, wobei ein gemeinsames einwechseln aus einem Werkzeugmagazin der Werkzeugmaschine möglich ist.

Bevorzugt weist der Schaft eine Werkzeugschnittstelle zur Aufnahme des Schleifwerkzeugs an der Arbeitsspindel der Werkzeugmaschine auf, wobei insbesondere die Kühlmittelzufuhreinrichtung bevorzugt an der Werkzeugschnittstelle des Schleifwerkzeugs fixierbar ist. Eine derartige Werkzeugschnittstelle kann z.B. als Hohlschaftkegel, Steilkegel oder Morsekegel ausgebildet sein.

Die Kühlmittelzufuhreinrichtung des Schleifwerkzeugs kann vorteilhaft schwimmend am Schleifwerkzeug gelagert sein.

Zur schwimmenden Lagerung des Schleifwerkzeugs der Kühlmittelzufuhreinrichtung kann ein Konturteil an der Kühlmittelzufuhreinrichtung vorgesehen sein, welches zur Lagerung des Schleifwerkzeugs in eine Führungsnut des Schafts des Schleifwerkzeugs, insbesondere in eine Nut der Werkzeugschnittstelle, eingreifen kann und zur Lagerung in radialer Richtung kann der Schieber in die erste Nut greifen.

Dadurch ist es vorteilhaft möglich, die Kühlmittelzufuhreinrichtung schwimmend zu lagern wenn bspw. das Schleifwerkzeug mit der Kühlmittelzufuhreinrichtung gemeinsam bewegt werden soll. Dies ist der Fall wenn das Schleifwerkzeug mit der Kühlmittelzufuhreinrichtung gemeinsam eingespannt/ausgespannt werden soll oder wenn sie aus dem/in das Werkzeugmagazin bewegt werden sollen.

Vor Beginn des Bearbeitungsvorgangs ist es möglich, die Lagerung durch Ausbilden eines Spalts frei zu geben, sodass das Schleifwerkzeug sich frei drehen kann und die Kühlmittelzufuhreinrichtung fest bzw. ortsfest mit dem Anschlussring der Werkzeugspindel bzw. dem Spindelgehäuse oder Fräskopf der Werkzeugmaschine verbunden bleibt, ohne sich mitzudrehen.

Das Spannmittel (Spanneinrichtung) des Schleifwerkzeugs kann in einer Fixierungsposition die Kühlmittelzufuhreinrichtung am Schaft des Schleifwerkzeugs in radialer Richtung fixieren und in einer Freigabeposition eine Rotation des Schafts um eine Längsachse gegenüber der Kühlmittelzufuhreinrichtung erlauben. In der Fixierungsposition wird somit eine Rotation des Schafts um eine Längsachse gegenüber der Kühlmittelzufuhreinrichtung blockiert, und in der Freigabeposition freigegeben.

Zum Umschalten zwischen der Freigabeposition und der Fixierungsposition des Schleifwerkzeugs kann das Schubmittel (Andockelement) betätigt werden.

Der Schaft bzw. die Werkzeugschnittstelle des Schleifwerkzeugs kann vorteilhaft eine (erste) Nut aufweisen, in die der Schieber der Kühlmittelzufuhreinrichtung geführt wird, wobei in der Fixierungsposition der Schieber in die (erste) Nut des Schleifwerkzeugs eingreift und der Freigabeposition der Schieber aus der Nut austritt, so dass eine Relativbewegung des Schleifwerkzeugs zur Kühlmittelzufuhreinrichtung ermöglicht ist.

Die Abgabeöffnung der Leitungseinheit des Schleifwerkzeugs kann derart im Bereich des Schleifkörpers angeordnet sein, dass ein Kühlschmiermittel aus der Abgabeöffnung in einen Arbeitsbereich des Schleifkörpers zur Schmierung und/oder Kühlung zugeführt werden kann, wobei die Ausrichtung und/oder Orientierung der Abgabeöffnung der Leitungseinheit insbesondere mechanisch, elektrisch, pneumatisch und/oder hydraulisch verstellbar ist und/oder die Leitungseinheit insbesondere lösbar befestigt ist.

Das Schleifwerkzeug kann zudem für einen Fräskopf einer Werkzeugmaschine vorgesehen sein.

Das Schubmittel des Schleifwerkzeugs kann vorteilhaft entlang einer Bewegungsachse bewegbar sein, welche parallel zur Längsachse des Schafts ist.

Eine Werkzeugmaschine kann mit einer Arbeitsspindel, welche eine Werkzeugaufnahme aufweist und ein Anschlussring, welcher im Bereich der Werkzeugaufnahme angeordnet sein kann ausgestattet sein.

Der Anschlussring kann zumindest ein inneres Leitungssystem für Kühlmittel und ein Spannmittel aufweisen wobei ein Umschaltstück vorgesehen sein kann zum Umschalten des Kühlmittelflusses vom inneren Leitungssystem des Anschlussrings zu einer kontaktierbaren Kühlmittelzufuhreinrichtung. Dadurch ist es vorteilhaft möglich eine Kühlmittelzufuhreinrichtung an den Standard-Kühlmittelkreis der Werkzeugmaschine anzubringen und somit ein Umschalten je nach Bearbeitungsvorgang zu ermöglichen. Beim Fräsen an der Werkzeugmaschine können die Standard-Düsen für das Kühlmittel verwendet werden und beim Schleifen kann durch Anschließen der Kühlmittelzufuhreinrichtung auf diese umgeschaltet werden um das Kühlmittel direkt zur Schleifstelle zuführen zu können.

Insbesondere wird eine Werkzeugmaschine vorgeschlagen, insbesondere eine Werkzeugmaschine mit einer werkzeugtragenden Arbeitsspindel, welche eine Werkzeugaufnahme aufweist und ein Anschlussring, welcher im Bereich der Werkzeugaufnahme angeordnet ist, wobei der Anschlussring zumindest ein inneres Leitungssystem für Kühlmittel und eine Spanneinrichtung zum Einspannen zumindest eines Eingreifabschnitts einer Kühlmittelzufuhreinrichtung gemäß zumindest einem der vorstehenden Aspekte aufweist und wobei bevorzugt am Anschlussring ein Umschaltstück vorgesehen sein kann zum Umschalten des Kühlmittelflusses vom inneren Leitungssystem des Anschlussrings zu einer Andockeinrichtung (des Anschlussrings) zur Kopplung an die Kühlmittelzufuhreinrichtung.

Die Werkzeugmaschine kann einen Werkzeugwechsler und ein Werkzeugmagazin, umfassen, wobei der Werkzeugwechsler dazu eingerichtet sein kann, ein Werkzeug, welches an der Arbeitsspindel eingespannt ist, durch ein Werkzeug aus dem Werkzeugmagazin auszuwechseln, und wobei ein Schleifwerkzeug gemeinsam mit der Kühlmittelzufuhreinrichtung im Magazin aufnehmbar sein kann und durch den Werkzeugwechsler eingewechselt werden kann. Ein automatisiertes Einwechseln des Schleifwerkzeugs mit der daran angebrachten Kühlmittelzufuhreinrichtung wird somit vorteilhaft ermöglicht.

Das Kombinationswerkzeug aus Kühlmittelzufuhreinrichtung und Schleifwerkzeug kann beim Einspannen des Kombinationswerkzeugs in die Arbeitsspindel durch die Kontaktierung des Kopplungsmittels (Kopplungseinrichtung) mit dem Umschaltstück in die Freigabeposition geschaltet werden. Somit wird automatisch beim Einspannen/Ausspannen des Kombinationswerkzeugs ein Umschalten vom Standard-Kühlmittelkreis auf die Kühlmittelzufuhreinrichtung erreicht.

Die Kühlmittelzufuhreinrichtung der Werkzeugmaschine kann mit dem Schleifwerkzeug bei Anordnung im Werkzeugmagazin in die Fixierungsposition geschaltet sein und bei Anordnung der an der Arbeitsspindel in die Freigabeposition geschaltet sein.

Die Werkzeugmaschine kann eine Fräsmaschine sein. Somit ist es vorteilhaft möglich ein Schleifwerkzeug mit optimaler Kühlung in die Fräsmaschine einzuspannen und gleichzeitig eine optimierte Kühlung an der Schleifstelle zu gewährleisten und ohne einen zusätzlichen Kühlungsblock einwechseln zu müssen. Eine separate Schleifmaschine ist somit nicht nötig.

Zum Andocken der Kühlmittelzufuhreinrichtung an die Werkzeugmaschine können die Spannmittel (Spanneinrichtung) des Anschlussrings in die Eingreifbohrungen bzw. Eingreifabschnitte der Kühlmittelzufuhreinrichtung eingreifen und die Kühlmittelzufuhreinrichtung kann axial zum Anschlussring herangezogen werden und zudem kann das Schleifwerkzeug an der Aufnahme der Arbeitsspindel der Werkzeugmaschine aufgenommen werden, wobei durch das Andocken der Kühlmittelzufuhreinrichtung und das Aufnehmen des Schleifwerkzeugs bevorzugt ein Spalt zwischen der Kühlmittelzufuhreinrichtung und dem Schleifwerkzeug fixiert bzw. eingestellt werden kann. Dadurch ist ein freies Drehen des Schleifwerkzeugs (z.B. bei angetriebener Rotation durch die rotierende Arbeitsspindel um die Spindelachse), unabhängig von der vorgesehenen Kühlmittelzufuhreinrichtung ermöglicht.

Beim Andocken kann vorteilhaft der Stößel (Andockelement) der Werkzeugmaschine aktuiert werden.

Das Umschaltstück kann vorteilhaft einen Innenzylinder und eine am Innenzylinder geführte Umschalthülse aufweisen, wobei zum Umschalten des Kühlmittelflusses vom inneren Leitungssystem zur Kühlmittelzufuhreinrichtung die Umschalthülse relativ zum Umschaltzylinder durch einen Andockzylinder des Kopplungsmittels bewegt wird, um Umschaltbohrungen des Innenzylinders frei zu geben und den Kühlmittelfluss umzuleiten.

Vorteilhafte Ausgestaltungen und weitere Details der vorliegenden Erfindung sowie weitere Aspekte und deren Vorteile als auch Vorteile und speziellere Ausführungsmöglichkeiten der vorstehend beschriebenen Aspekte und Merkmale werden aus den folgenden - jedoch in keinster Weise einschränkend aufzufassenden - Beschreibungen und Erläuterungen zu den angehängten Figuren beschrieben.

### Kurzbeschreibung der Figuren

**Fig. 1** zeigt beispielhaft eine Darstellung eines herkömmlichen Schleifwerkzeugs an einer Arbeitsspindel einer Werkzeugmaschine;
**Fig. 2** zeigt beispielhaft eine Darstellung eines Schleifwerkzeugs mit einer Kühlmittelzufuhreinrichtung gemäß einem Ausführungsbeispiel;
**Fig. 3** zeigt beispielhaft eine Darstellung des Schleifwerkzeugs mit der Kühlmittelzufuhreinrichtung gemäß Fig. 1 an einer Arbeitsspindel einer Werkzeugmaschine gemäß einem Ausführungsbeispiel;
**Fig. 4** zeigt beispielhaft eine Darstellung der Arbeitsspindel der Werkzeugmaschine gemäß Fig. 3 ohne aufgenommenes Schleifwerkzeug;
**Fig. 5** zeigt beispielhaft eine Schnittdarstellung des Schleifwerkzeugs mit der Kühlmittelzufuhreinrichtung gemäß Fig. 1 an der Arbeitsspindel der Werkzeugmaschine gemäß einem Ausführungsbeispiel;
**Fig. 6** zeigt beispielhaft eine Detaildarstellung des Spalts zwischen Schleifwerkzeug und Kühlmittelzufuhreinrichtung gemäß Fig. 1 an der Arbeitsspindel der Werkzeugmaschine gemäß einem Ausführungsbeispiel;
**Fig. 7** zeigt beispielhaft eine Darstellung eines Schleifwerkzeugs mit einer Kühlmittelzufuhreinrichtung und einen Anschlussring an einer Arbeitsspindel einer Werkzeugmaschine;
**Fig. 8** zeigt eine weitere beispielhafte Ansicht des Anschlussrings der Arbeitsspindel der Werkzeugmaschine;
**Fig. 9** zeigt eine beispielhafte Schnittansicht durch den Anschlussring der Werkzeugmaschine;
**Fig. 10a** zeigt beispielhaft einen Innenzylinder des Umschaltstücks des Anschlussrings der Werkzeugmaschine;
**Fig. 10b** zeigt beispielhaft eine Umschalthülse des Umschaltstücks des Anschlussrings der Werkzeugmaschine;
**Fig. 11** zeigt eine beispielhafte Schnittdarstellung des Umschaltstücks;
**Fig. 12** zeigt ein beispielhaftes Schleifwerkzeug mit einer daran montierten Kühlmittelzufuhreinrichtung;
**Fig. 13** zeigt eine weitere beispielhafte Darstellung des Schleifwerkzeugs mit der Kühlmittelzufuhreinrichtung;
**Fig. 14** zeigt eine beispielhafte Detailansicht des Spannmittels der Kühlmittelzufuhreinrichtung; und
**Fig. 15** zeigt eine beispielhafte Ansicht des Schleifwerkzeugs mit der Kühlmittelzufuhreinrichtung in einem Werkzeugmagazin.

### Detaillierte Beschreibung der Figuren und von Ausführungsbeispielen

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

Es sei hervorgehoben, dass die vorliegende Erfindung jedoch in keinster Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

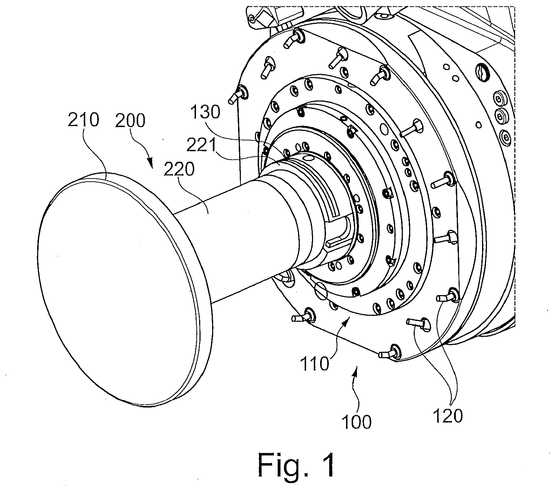

Fig. 1 zeigt beispielhaft eine Darstellung eines herkömmlichen Schleifwerkzeugs 200 an einer Arbeitsspindel 100 einer Werkzeugmaschine. Die Arbeitsspindel 100 umfasst einen Anschlussring 110 um eine Werkzeugaufnahme 130, in der eine Werkzeugschnittstelle (z.B. ein Hohlschaftkegel, Steilkegel oder Morsekegel) eines Werkzeugs eingespannt werden kann, insbesondere zum Antreiben einer Rotation des Werkzeugs.

Am Anschlussring 110 sind herkömmlich Kühlmitteldüsen 120 einer Kühlmittelzufuhr angeordnet, die bei Bearbeitung Kühlmittel zu dem an der Arbeitsspindel aufgenommenen Werkzeug zuführen können. Man spricht hierbei meist von AKZ bzw. äußerer Kühlmittelzufuhr (insbesondere abgrenzbar von innerer Kühlmittelzufuhr IKZ, die in der Werkzeugaufnahme 130 andockbar sein kann).

Beispielhaft ist in Fig. 1 an der Werkzeugaufnahme 130 der Arbeitsspindel 100 an ein Schleifwerkzeug 200 mit einer Schleifscheibe 210 an einem Schaft 220 mittels einer Werkzeugschnittstelle 221 (beispielhaft als HSK bzw. Hohlschaftkegel ausgebildet) aufgenommen bzw. eingespannt.

Hierbei wird jedoch erkennbar, dass eine direkte und genaue Kühlmittelzufuhr mittels der Düsen 120 nicht ausreichend genau und zielgerichtet zu der Schleifscheibe möglich ist. Dies wird mit einer Kühlmittezufuhreinrichtung der Erfindung und insbesondere der folgenden Ausführungsbeispiele verbessert und genauer ermöglicht.

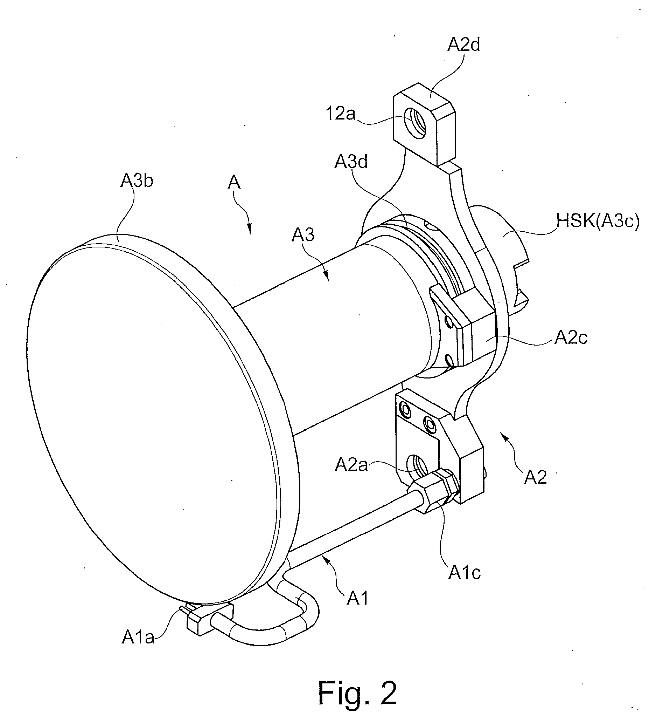

Fig. 2 zeigt beispielhaft eine Darstellung eines Schleifwerkzeugs A3 mit einer Kühlmittelzufuhreinrichtung A2 gemäß einem Ausführungsbeispiel. Die Kühlmittelzufuhreinrichtung A2 und das Schleifwerkzeug A3 bilden beispielhaft ein Kombinationswerkzeug eines Ausführungsbeispiels.

Analog zu Fig. 1 weist das Schleifwerkzeug A3 beispielhaft eine Schleifscheibe A3b (Schleifkörper) auf, die an einem Schaft mit einer Werkzeugschnittstelle A3c mit Greiferrille A3d (Nut) angeordnet ist. Erneut ist die Werkzeugschnittstelle A3c beispielhaft als Hohlschaftkegel (HSK) ausgebildet, jedoch können Werkzeugschnittstellen auch anders, z.B. als Steilkegel oder Morsekegel, ausgebildet sein.

Weiterhin ist die Kühlmittelzufuhreinrichtung A2 beispielhaft an der Werkzeugschnittstelle anbringbar, jedoch ist es ebenso möglich, die Kühlmittelzufuhreinrichtung A2 am Schaft oberhalb der Werkzeugschnittstelle anzubringen.

Die Kühlmittelzufuhreinrichtung A2 weist beispielhaft einen Grundkörper A2b auf, der beispielhaft zwei abstehende Abschnitte mit jeweiligen Eingreifabschnitten A2a (beispielhaft Bohrungen) aufweist. Die Kühlmittelzufuhreinrichtung A2 weist weiterhin beispielhaft eine SpanneinrichtungA2c zur Fixierung an der Werkzeugschnittstelle A3c des Schleifwerkzeugs A3 auf.

In nicht an der Arbeitsspindel eingespanntem Zustand fixiert die Spanneinrichtung A2c das Schleifwerkzeug A3 bevorzugt an der Kühlmittelzufuhreinrichtung A2, bzw. die Kühlmittelzufuhreinrichtung A2 an dem Schleifwerkzeug A3.

Die Kühlmittelzufuhreinrichtung A2 weist beispielhaft weiterhin eine Leitungseinheit A1 mit einer Abgabeöffnung A1a zur Abgabe von Kühlmittel an der Schleifscheibe A3b auf, wobei die Leitungseinheit A1 beispielhaft an einer Seite eines Einlassabschnitts A1c an dem Grundkörper bzw. einem Abschnitt der Eingreifabschnitte A2a der Kühlmittelzufuhreinrichtung A2 befestigt ist.

Beispielhaft ist die Leitungseinheit A1 lösbar befestigt (z.B. mittels einer Schraubverbindung), insbesondere bevorzugt zum Auswechseln mit anderen, kürzeren, längeren und/oder anders geformten Leitungseinheiten z.B. für andere Werkzeugformen (z.B. in Abhängigkeit von Schaftlänge und/oder Schleifscheibendicke und/oder -durchmesser) oder für Wartungszwecke.

Weiterhin kann die Leitungseinheit A1 flexible Abschnitte und/oder Gelenke aufweisen, die manuell formbar, biegbar, verschiebbar, in der Länge verstellbar oder andersartig manuell verstellbar sind, z.B. zur manuellen Justierung der Position bzw. Ausrichtung der Abgabeöffnung A1a. In weiteren Ausführungsbeispielen kann die Leitungseinheit A1 zusätzlich oder alternativ Justiereinrichtungen aufweisen, die eine elektrische, hydraulische, pneumatische oder andersartige Verstellung der Position bzw. Ausrichtung der Abgabeöffnung A1a ermöglichen.

Zudem oder alternativ ist es möglich, dass eine Düseneinstellung der Abgabeöffnung A1a manuell, elektrisch, pneumatisch und/oder hydraulisch verstellbar ist. Weiterhin können zusätzlich oder alternativ zu der Leitungseinheit A1 für Kühlmittel auch andere Leitungen z.B. für Sperrluft oder Hydraulik vorgesehen sein.

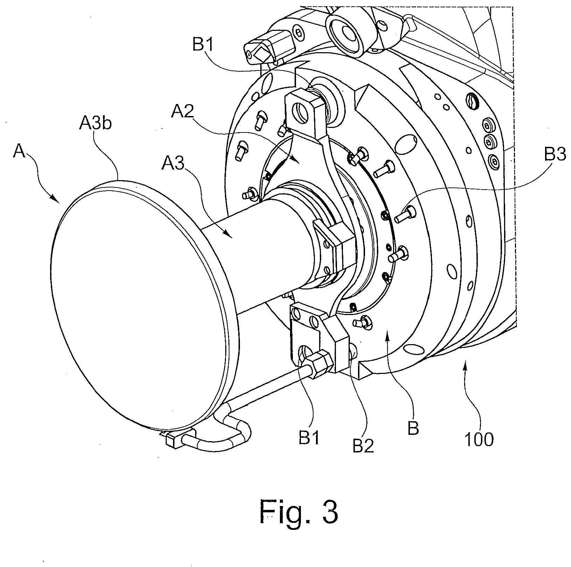

Fig. 3 zeigt beispielhaft eine Darstellung des Schleifwerkzeugs A3 mit der Kühlmittelzufuhreinrichtung A2 gemäß Fig. 1 an einer Arbeitsspindel 100 einer Werkzeugmaschine gemäß einem Ausführungsbeispiel.

Beispielhaft weist der Anschlussring B der Arbeitsspindel 100 neben den Düsen B3 zusätzliche Spannelemente B1 und eine Andockeinrichtung B2 auf.

Wenn nun das Schleifwerkzeug A3 zusammen mit der Kühlmittelzufuhreinrichtung A2 aus einem Werkzeugmagazin entnommen und eingewechselt wird und die Werkzeugschnittstelle A3c des Schleifwerkzeugs A3 in der Werkzeugaufnahme 130 der Arbeitsspindel 100 aufgenommen und eingespannt wird (wobei die Werkzeugschnittstelle A3c zu der Arbeitsspindel 100 hin gezogen gespannt wird), greifen die beispielhaften Öffnungen der Eingreifabschnitte A2a der Kühlmittelzufuhreinrichtung A2 an den Spannelementen B1 des Anschlussrings B der Arbeitsspindel 100 an und werden an diesen positioniert und an der vorgegebenen Position zentriert.

Dies spannt die Kühlmittelzufuhreinrichtung A2 mittels der Eingreifabschnitte A2a in vorgegebener Position an dem Anschlussring B der Arbeitsspindel 100 ortsfest ein und fixiert die Kühlmittelzufuhreinrichtung A2 an dem Anschlussring B der Arbeitsspindel 100, wenn das SchleifwerkzeugA3 an der Werkzeugaufnahme 130 der 100 aufgenommen und gespannt ist.

Zudem wird in diesem Einspannzustand eine Kopplungseinrichtung der Kühlmittelzufuhreinrichtung A2 (später beschrieben) mit einem an dem Anschlussring B der Arbeitsspindel 100 angeordneten Andockelement einer Andockeinrichtung B2 gekoppelt, bevorzugt zur Zuführung von Kühlmittel aus dem Kühlkreislauf der äußeren Kühlmittelzufuhr der Arbeitsspindel zu dem Leitungselement A1.

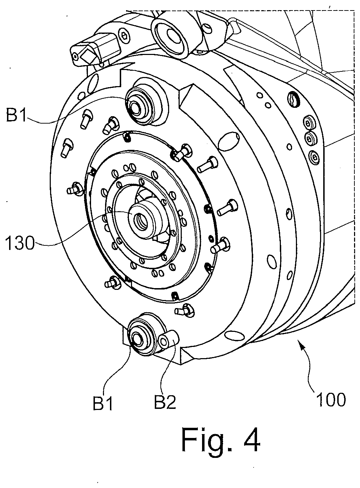

Fig. 4 zeigt beispielhaft eine Darstellung der Arbeitsspindel der Werkzeugmaschine gemäß Fig. 3 ohne aufgenommenes Schleifwerkzeug. Beispielhaft ist der Anschlussring B der Arbeitsspindel 100 im Gegensatz zu dem herkömmlichen Aufbau gemäß Fig. 1 um die Spanneinrichtung mit den Spannelementen B1 und die Andockeinrichtung B2 erweitert.

Die Andockeinrichtung B2 ist mit einem Kühlmittelzufuhrkreis des Anschlussrings B der Arbeitsspindel 100 verbunden bzw. bevorzugt durch umschalten eines Ventils verbindbar.

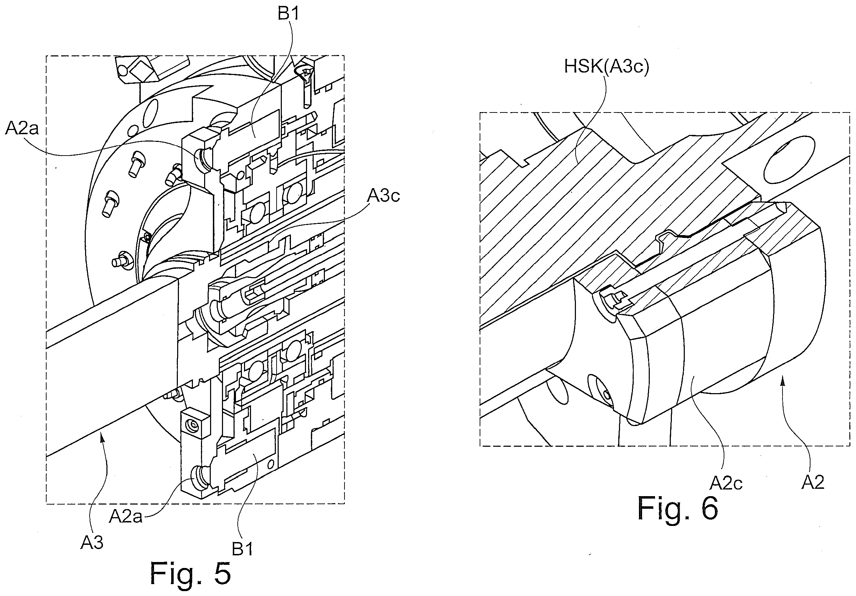

Fig. 5 zeigt beispielhaft eine Schnittdarstellung des Schleifwerkzeugs mit der Kühlmittelzufuhreinrichtung gemäß Fig. 1 an der Arbeitsspindel der Werkzeugmaschine gemäß einem Ausführungsbeispiel. Hierbei ist zu sehen, dass die Werkzeugschnittstelle A3c in der Werkzeugaufnahme 130 gespannt ist und zu der Arbeitsspindel hingezogen ist.

Die Öffnungen der Eingreifabschnitte A2a der Kühlmittelzufuhreinrichtung A2 sind hierbei beispielhaft auf gegenüberliegenden Seiten angeordnet und die Spannelemente B1 der Spanneinrichtung des Anschlussrings B der Arbeitsspindel 100 greifen in diese ein und zentrieren und positionieren die Kühlmittelzufuhreinrichtung A2 somit in genauer vorgegebener Position an dem Anschlussring B der Arbeitsspindel 100, wenn das Schleifwerkzeug A3 an der Werkzeugspindel 100 aufgenommen und eingespannt ist.

Um jedoch zu ermöglichen, dass in diesem ortsfest eingespannten Zustand der Kühlmittelzufuhreinrichtung A2 das Schleifwerkzeug A3 ungehindert und reibungsfrei an der Arbeitsspindel 100 rotatorisch antreibbar ist, wird die Spanneinrichtung A2c der Kühlmittelzufuhreinrichtung A2 derart eingerichtet, dass sie in dem ortsfest eingespannten Zustand der Kühlmittelzufuhreinrichtung A2 die Einspannung des Schleifwerkzeugs A3 freigibt und zwischen dem Schleifwerkzeug A3 und der Kühlmittelzufuhreinrichtung A2 ein Spalt eingestellt wird, insbesondere bevorzugt zwischen der Werkzeugschnittstelle des Schleifwerkzeugs A3 und der Spanneinrichtung A2c der Kühlmittelzufuhreinrichtung A2.

Fig. 6 zeigt beispielhaft eine Detaildarstellung des vorstehend genannten Spalts zwischen Schleifwerkzeug und Kühlmittelzufuhreinrichtung gemäß Fig. 1 an der Arbeitsspindel der Werkzeugmaschine gemäß einem Ausführungsbeispiel.

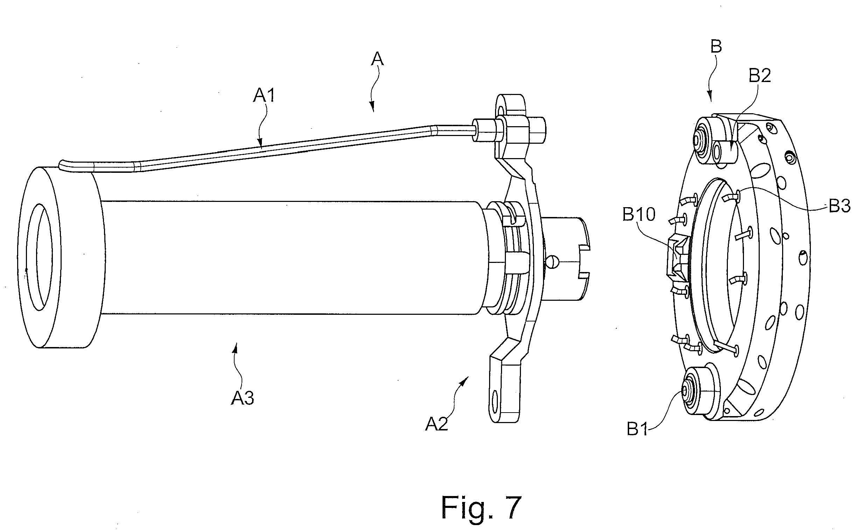

Fig. 7 zeigt beispielhaft eine Darstellung eines Schleifwerkzeugs mit einer Kühlmittelzufuhreinrichtung und einen Anschlussring an einer Arbeitsspindel einer Werkzeugmaschine.

In Fig. 7 ist das Schleifwerkzeug A3 (bzw. ein Schleifwerkzeughalter zur Aufnahme einer Schleifscheibe) dargestellt, auf welchem die Kühlmittelzufuhreinrichtung A2 (Kühlmittelzufuhreinrichtung) angeordnet ist.

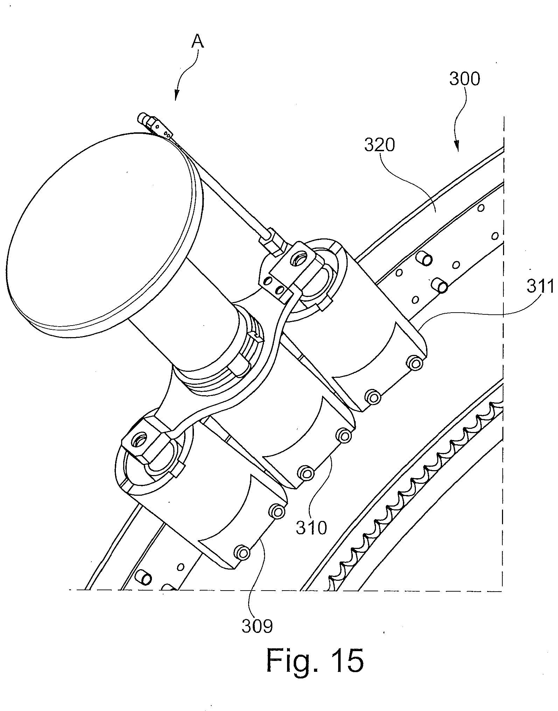

Das Schleifwerkzeug A3, welches beispielhaft mit der Kühlmittelzufuhreinrichtung A2 verbunden ist, wird beispielhaft als Kombinationswerkzeug A bezeichnet. Dieses Kombinationswerkzeug A kann beispielsweise in einem Werkzeugmagazin einer Werkzeugmaschine in vorgesehenen Köchern bzw. Werkzeugköchern aufgenommen werden und beim Einwechseln über einen Werkzeugwechsler der Werkzeugmaschine automatisch ein- und/oder ausgewechselt werden (siehe Fig. 15).

Die Werkzeugmaschine, welche insbesondere eine Werkzeugmaschine mit einer werkzeugtragenden Arbeitsspindel (z.B. Fräsmaschine, Universal-werkzeugmaschine, Fräs-/Drehmaschine, Bearbeitungszentrum) sein kann, und welche zudem bevorzugt eine Werkzeugwechselvorrichtung umfasst, kann automatisch das Kombinationswerkzeug A aus dem Werkzeugmagazin entnehmen und an der Arbeitsspindel der Werkzeugmaschine positionieren, aufnehmen und einspannen und auch wieder mittels der Werkzeugwechselvorrichtung auswechseln und in dem Werkzeugmagazin bzw. einem Köcher des Werkzeugmagazins ablegen.

Im vorliegenden Ausführungsbeispiel ist das Schleifwerkzeug A3 lediglich beispielhaft mit einem Hohlschaftkegel als Werkzeugschnittstelle zur Aufnahme in der Arbeitsspindel ausgebildet. Jedoch ist die vorliegende Erfindung nicht auf Ausführungen mit Hohlschaftkegel als Werkzeugschnittstelle beschränkt, sondern es können vielmehr auch weitere Werkzeugschnittstellen Verwendung finden, insbesondere z.B. Steilkegel oder Morsekegel neben dem gezeigten Hohlschaftkegel.

Derartige Werkzeugschnittstellen weisen in der Regel Abschnitte auf, an denen die Werkzeugschnittstelle z.B. für den Werkzeugwechsel an der Arbeitsspindel bzw. zur Aufnahme aus dem Werkzeugmagazin von einer Greifereinrichtung der Werkzeugwechseleinrichtung gegriffen werden kann. Im vorliegenden Ausführungsbeispiel wird ein derartiger Abschnitt (Greiferabschnitt) lediglich beispielhaft als Greiferrille am Hohlschaftkegel als Werkzeugschnittstelle ausgebildet.

Zur Anbindung des Kombinationswerkzeugs A an die Arbeitsspindel der Werkzeugmaschine ist der Anschlussring B vorgesehen, welcher über Spannmittel (Spannabschnitte bzw. Spannelemente) B1 verfügt, an welchen die Eingreifabschnitte bzw. insbesondere Eingreifbohrungen der Kühlmittel-zufuhreinrichtung A2 angedockt werden können.

Insbesondere sind die Spannmittel B1 des Anschlussrings B beispielhaft als Bohrungsspanner ausgestaltet, welche zur Positionierung und Einspannung der Kühlmittelzufuhreinrichtung A2 in die Eingreifbohrungen der Kühlmittelzufuhreinrichtung A2 hineingeführt werden, um diese zu positionieren und verspannen. Der Anschlussring B der Werkzeugmaschine weist zudem beispielhaft die Kühlmittelzufuhrelemente B3 (Düsen) auf, welche die Standardkühlmittelzufuhrdüsen der Werkzeugmaschine sind.

Das Schleifwerkzeug A3 wird über die Werkzeugschnittstelle an der Arbeitsspindel der Werkzeugmaschine eingespannt und fixiert. Bevorzugt verfügt der Schaft des Schleifwerkzeugs A3 über eine HSK (Hohlschaftkegel)-Aufnahme als Werkzeugschnittstelle zum Einspannen an der Arbeitsspindel. Wie bereits erwähnt, weist ein derartiger HSK (Hohlschaftkegel) einen Werkzeugschnittstellenkörper auf mit einer Greiferrille und einem Aufnahmeabschnitt zum Aufnehmen und Einspannen an der Arbeitsspindel.

Die Kühlmittelzufuhreinrichtung wird beispielhaft an dem Werkzeugschnitt-stellenkörper am Schaft des Schleifwerkzeugs angeordnet bzw. angebracht. Dabei greift ein Element beispielhaft in die umlaufende Greiferrille des Werkzeugschnittstellenkörpers und sichert die Kühlmittelzufuhreinrichtung A2 axial an dem Werkzeugschnittstellenkörper am Schaft des Schleifwerkzeugs A3.

Zudem ist beispielhaft ein federgespannter Schieber vorgesehen, welcher in eine seitliche Nut an dem Werkzeugschnittstellenkörper eingreifen kann, um die Kühlmittelzufuhreinrichtung A2 radial zu fixieren.

Zum Einspannen der Kühlmittelzufuhreinrichtung A2 über die Eingreifbohrungen (Eingreifabschnitte) am Anschlussring B wird diese beispielhaft über die zwei Bohrungsspanner (Spannelemente bzw. Spannmittel B1) positioniert, zentriert und eingespannt.

Wird das Schleifwerkzeug A3 zusammen mit der Kühlmittelzufuhreinrichtung A2 gemeinsam vom Werkzeugwechsler eingewechselt, so fädeln die Eingreifbohrungen der KühlmittelzufuhreinrichtungA2 in die Spannmittel B1 (Spannelemente bzw. Bohrungsspanner) ein.

Wird das Werkzeug A3 nun an der Arbeitsspindel eingespannt, so wird ein vorbestimmter, umlaufender Spalt zwischen dem Schleifwerkzeug (bzw. dem Werkzeugschnittstellenkörper) und der angedockten Kühlmittelzufuhreinrichtung A2 eingestellt (siehe Fig. 6).

Durch Bewegung des Stößels (Andockelement) wird zudem der Schieber des Spannmittels A2c aus der ersten Nut A3e gepresst. Die Kühlmittelzufuhreinrichtung A2 ist somit am Fräskopf bzw. am Anschlussring B ortsfest fixiert, und das Schleifwerkzeug A3 mit dem Schleifkörper (Schleifscheibe) kann aufgrund des Spalts frei drehen.

Um diesen Spalt auch bei der Bearbeitung frei zu halten und Reibung durch etwaigen eindringenden Schmutz zu vermeiden, können weitere Düsen vorgesehen sein, die auf oder in den Spalt Sperrluft und/oder Kühl- bzw. Schmiermittel einführen, einspritzen und/oder einblasen, um ein eine Reibung bewirkendes Eindringen von ungewollten Staub- und/oder Spanschmutz in den Spalt vermeiden zu können.

Der beschriebene Verbindungsprozess zwischen dem Kombinationswerkzeug A und dem Anschlussring B wird auch als Andocken bezeichnet. Bei diesem Andocken wird zudem durch eine Schiebemechanik, welche als Umschaltstück B2 (Andockeinrichtung) vorliegt, die Kühlmittelzufuhr von den Standardkühlmittelzufuhrelementen B3 auf die eingewechselte Kühlmittelzufuhreinrichtung A2 umgeschaltet. Dadurch kann bei Bedarf der komplette Kühlschmierstoffvolumenstrom für das Schleifen verwendet werden.

Beim Auswechseln des Kombinationswerkzeugs A wird wiederum automatisch die Kühlmittelzufuhr auf die Kühlmittelzufuhrelement B3 des inneren Kühlmittelkreises des Anschlussrings B der Werkzeugmaschine umgeschaltet.

Durch die Bereitstellung des Kombinationswerkzeug A, welches das Schleifwerkzeug A3 und die Kühlmittelzufuhreinrichtung A2 umfasst, und durch das Vorsehen der Umschaltmöglichkeit durch das Umschaltstück B2 am Anschlussring B der Werkzeugmaschine ist es möglich, ein Schleifwerkzeug an einer Fräsmaschine zu nutzen, wobei vorteilhaft die Standardkühlmittelzufuhr der Fräsmaschine angezapft werden kann, um den Kühlschmierstoff an die Schleifstelle des Schleifwerkzeugs A3 zu befördern.

Für unterschiedliche Schleifwerkzeuge A3 mit unterschiedlichen Schleifkörpern können individuelle Kühlmittelzufuhreinrichtungen A2 bereitgestellt werden, welche einen angepassten Leitungsverlauf aufweisen, so dass die Abgabeöffnung für den Kühlschmierstoff für das jeweilige Werkzeug stets optimal positioniert ist.

In weiteren Ausführungen kann die Ausrichtung bzw. Orientierung der Abgabeöffnung auch manuell, elektrisch, pneumatisch und/oder hydraulisch verstellbar sein.

Dieses Kombinationswerkzeug A ist deutlich preiswerter als das Einwechseln eines separaten Düsenblocks zur Zufuhr des Kühlschmiermittels. Zudem ist durch die Verwendung des Kombinationswerkzeugs A keine zusätzliche Wechseleinheit notwendig, und es sind auch keine zusätzlichen Kühlmittelzufuhrelemente am Anschlussring B der Werkzeugmaschine nötig, um das Kühlschmiermittel an die gewünschte Schleifstelle zu befördern.

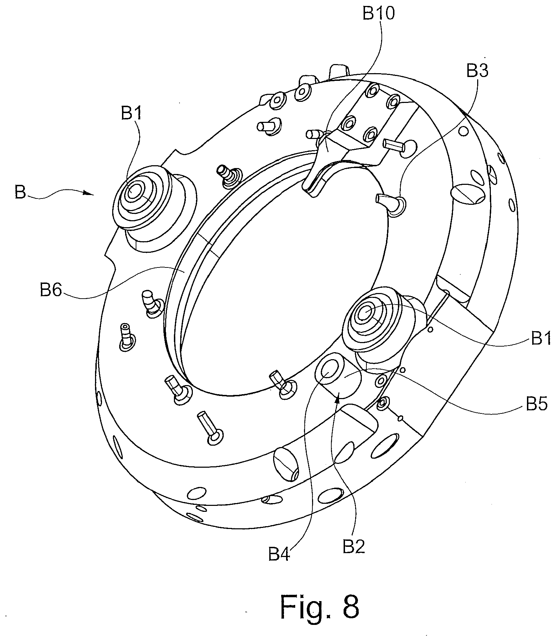

Fig. 8 zeigt eine weitere beispielhafte Ansicht des Anschlussrings der Arbeitsspindel der Werkzeugmaschine.

In Fig. 8 ist beispielhaft der Anschlussring B dargestellt. Dieser ist an der Werkzeugmaschine im Bereich der Arbeitsspindel vorgesehen. Im Anschlussring B ist ein innerer Kühlmittelkreis vorgesehen. Über diesen Kühlmittelkreis wird der Kühlschmierstoff transportiert, bis zu den jeweiligen Kühlmittelzufuhrelementen B3, welche insbesondere als Düsen ausgestaltet sind.

Über diese Düsen B3 wird der Kühlschmierstoff bei Verwendung der Werkzeugmaschine im Fräsbetrieb direkt an die Bearbeitungsflächen des Fräswerkzeugs befördert. Wird nun auf der Fräsmaschine anstatt eines Fräswerkzeugs ein Schleifwerkzeug eingewechselt, so weist dieses Schleifwerkzeug charakteristischerweise einen länglichen Schaft auf. Insbesondere bei Schleifwerkzeugen mit einem Schleifkörper, der eine Schleifscheibe ist, ist ein solcher länglicher Schaft nötig, um gezielte Bereiche des Werkstücks bearbeiten zu können.

Um beim eingewechselten Schleifwerkzeug eine ausreichende Zufuhr des Kühlschmiermittels zu erreichen, sind die Standardkühlmittelzufuhrelemente B3 jedoch nicht ausreichend. Es wird beispielhaft vorgeschlagen, den inneren Kühlschmiermittelkreis (z.B. den AKZ) über das Kühlschmierstoffumschaltstück B2 anzuzapfen und den Kühlschmierstoff von den Kühlmittelzufuhrelementen B3 umzuleiten, um ihn über eine Kühlmittelzufuhreinrichtung A2 gezielt an die Schleifstelle zu befördern.

Das Kühlschmierstoffumschaltstück B2 ist in der dargestellten Ausführungsform mit einem Innenzylinder B4 und einer Umschalthülse B5 versehen. Wird nun beim Andocken der Kühlmittelzufuhreinrichtung A2 an den Anschlussring B ein hohler Zylinder auf diese Umschalthülse B5 gepresst, so bewegt sich diese Umschalthülse B5 nach innen und gibt obere Umschaltbohrungen B4b des Innenzylinders B4 frei, so dass das Kühlschmiermittel aus dem Anschlussring B in die Kühlmittelzufuhreinrichtung A2 befördert werden kann.

Zur Befestigung der Kühlmittelzufuhreinrichtung A2 sind die Spannmittel B1 vorgesehen, welche insbesondere beispielhaft Spannbolzen sind. Diese Spannbolzen bzw. Spannelemente B1 greifen in die Eingreifbohrungen (Eingreifabschnitte) der KühlmittelzufuhreinrichtungA2 ein und fixieren diese.

Der Anschlussring B weist zudem beispielhaft die Aufnahme B6 auf, welche beispielhaft eine Durchgangsbohrung ist, durch welche das Abschlussstück der Werkzeugschnittstelle A3c des Schleifwerkzeugs A3 an der Werkzeugaufnahme 130 der Arbeitsspindel der Werkzeugmaschine angeschlossen werden kann, um das Drehmoment der Werkzeugmaschine in das Schleifwerkzeug einzubringen.

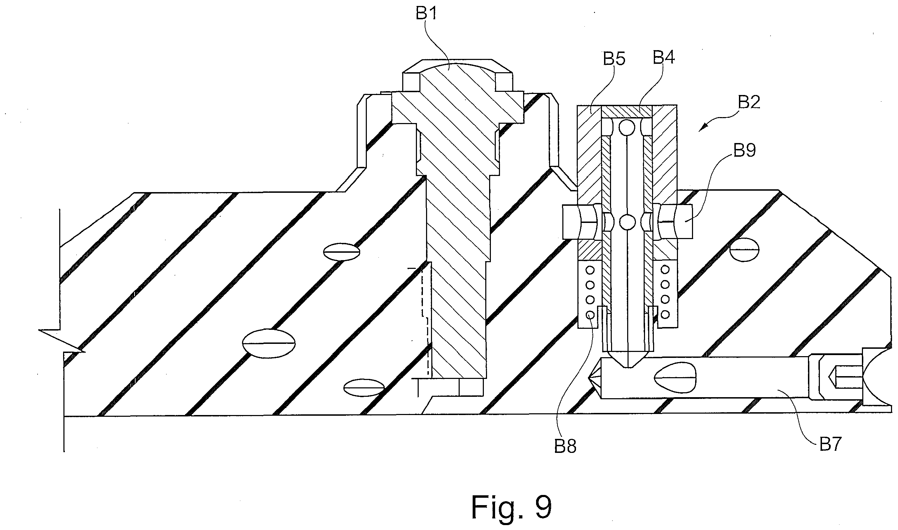

Fig. 9 zeigt eine beispielhafte Schnittansicht durch den Anschlussring der Werkzeugmaschine.

In Fig. 9 ist ein beispielhafter Schnitt durch das Spannmittel B1 (Spannelement) und das Umschaltstück B2 der Ventileinrichtung dargestellt. Das Umschaltstück B2 umfasst beispielhaft eine Umschalthülse B5, welche über eine Feder B8 aus dem Anschlussring B herausgedrückt wird. Über einen Innenzylinder B4, welcher in den Anschlussring B geschraubt ist, wird die Bewegung der Umschalthülse B5 begrenzt.

Der Kühlschmierstoff wird über den inneren Kühlschmierstoffkreis B9 den Kühlmittelzufuhrelementen B3 zugeführt, um im Fräsbetrieb der Werkzeugmaschine eine entsprechende Kühlmittelzufuhr zu gewährleisten.

Für den Schleifbetrieb der Fräsmaschine wird beim Andocken der Kühlmittelzufuhreinrichtung A2 die Umschalthülse B5 entgegen der Federkraft der Feder B8 in den Anschlussring B hineingepresst, um die obere Umschaltbohrung des Innenzylinders B4 freizugeben und gleichzeitig die untere Umschaltbohrung B4a des Innenzylinders B4b zu verschließen.

Durch dieses Verschließen wird eine Zufuhr des Kühlmittels in den inneren Kühlschmierstoffkreis B9 blockiert. Die Zufuhr des Kühlschmierstoffs kann dabei über den Kühlschmierstoffkreis B7 erfolgen.

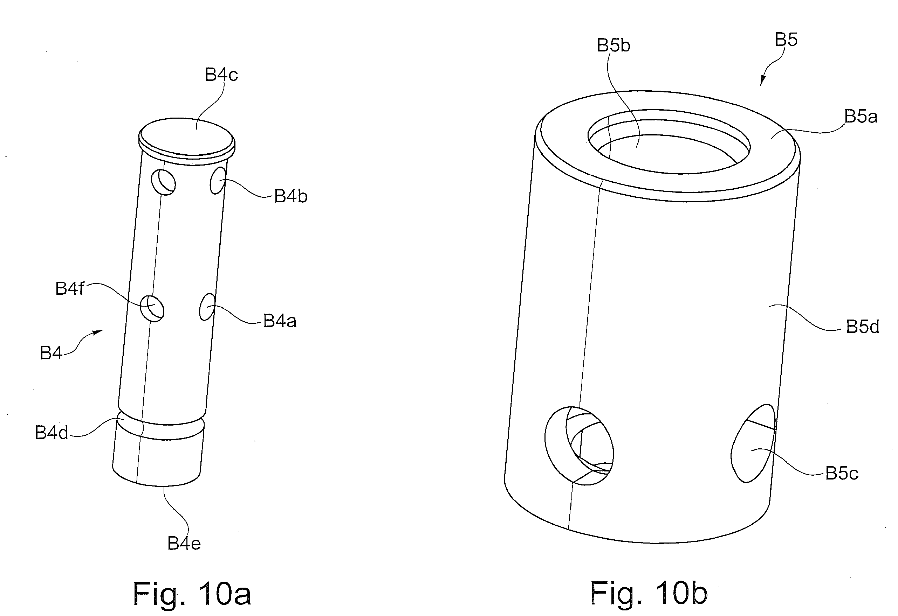

Fig. 10a zeigt beispielhaft einen Innenzylinder des Umschaltstücks des Anschlussrings der Werkzeugmaschine und Fig. 10b zeigt beispielhaft eine Umschalthülse des Umschaltstücks des Anschlussrings der Werkzeugmaschine.

In Fig. 10a und in Fig. 10b sind der Innenzylinder B4 und die Umschalthülse B5 im Detail dargestellt. Der Innenzylinder B4 des Umschaltstücks B2 weist eine Deckfläche B4c auf, welche gegenüber dem übrigen Zylinderkörper einen größeren Durchmesser aufweist, um somit als oberer Anschlag für die Umschalthülse B5 deren Axialbewegung hinweg vom Anschlussring B zu begrenzen.

Der Innenzylinder B4 ist beispielhaft hohl ausgestaltet und weist zur Umleitung des Kühlschmiermittels einen Innenraum B4f sowie untere Umschaltbohrungen B4a und obere Umschaltbohrungen B4b auf. Im Fußbereich des Innenzylinders B4 ist beispielhaft die Bodenfläche B4e vorgesehen, welche als Anschlussstelle an den Kühlschmiermittelkreislauf der Werkzeugmaschine dient, wobei zusätzlich im Fußbereich des Innenzylinders B4 eine Phase B4d (z.B. Gewindefreistich) vorgesehen ist.

Die Umschalthülse B5 weist eine Innengleitfläche B5b auf, entlang welcher die Umschalthülse B5 entlang der Außenfläche des Innenzylinders B4 gleitet. Die Innengleitfläche B5b weist an der Stirnseite der Umschalthülse B5 eine Stufe auf, welche als Gegenstück zur Deckfläche B4c des Innenzylinders B4 ausgestaltet ist, um die axiale Bewegung der Umschalthülse B5 zu begrenzen. Die Außengleitfläche B5d der Umschalthülse B5 gleitet im Anschlussring B5. Zum Umschalten des Kühlschmierstoffflusses weist die Umschalthülse B5 zudem die Zufuhrbohrungen B5c auf.

Bevorzugt sind vier symmetrische Bohrungen als Zufuhrbohrungen B5c vorgesehen. Bevorzugt weist auch der Innenzylinder B4 jeweils vier untere Umschaltbohrungen B4a und vier obere Umschaltbohrungen B4b auf, welche symmetrisch entlang des Umfangs in einer Ebene des Innenzylinders B5 angeordnet sind.

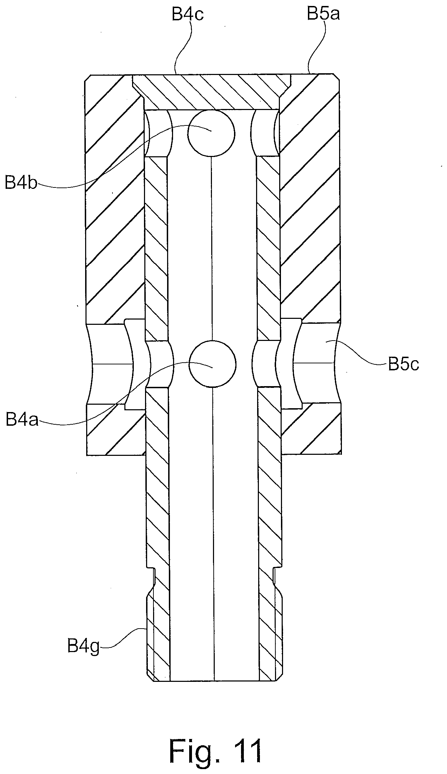

Fig. 11 zeigt eine beispielhafte Schnittdarstellung des Umschaltstücks. In Fig. 11 ist eine Schnittdarstellung des Innenzylinders B4, welcher in die Umschalthülse B5 eingeführt ist, dargestellt. Die Stufe der Deckfläche B4c ist dabei in Kontakt mit der Innengleitfläche B5d der Umschalthülse B5.

Die Umschalthülse B5 weist zudem die Kontaktfläche B5a auf, an welcher das Kopplungsmittel der Kühlmittelzufuhreinrichtung A2 angreift, um die Hülse beim Andockvorgang hin zum Anschlussring B4 zu verschieben. Dadurch wird die obere Umschaltbohrung B4b freigegeben, und die untere Umschaltbohrung B4A wird dadurch blockiert.

Das Blockieren der unteren Umschaltbohrung B4a erfolgt dabei durch Verschiebung der Hülse in den Fußbereich des Innenzylinders, so dass sich die Zufuhrbohrung B5c nicht mehr mit der unteren Umschaltbohrung B4a überlappt. Zur Fixierung des Umschaltstücks B2 ist beispielhaft am Innenzylinder B5 ein Gewinde B4g vorgesehen.

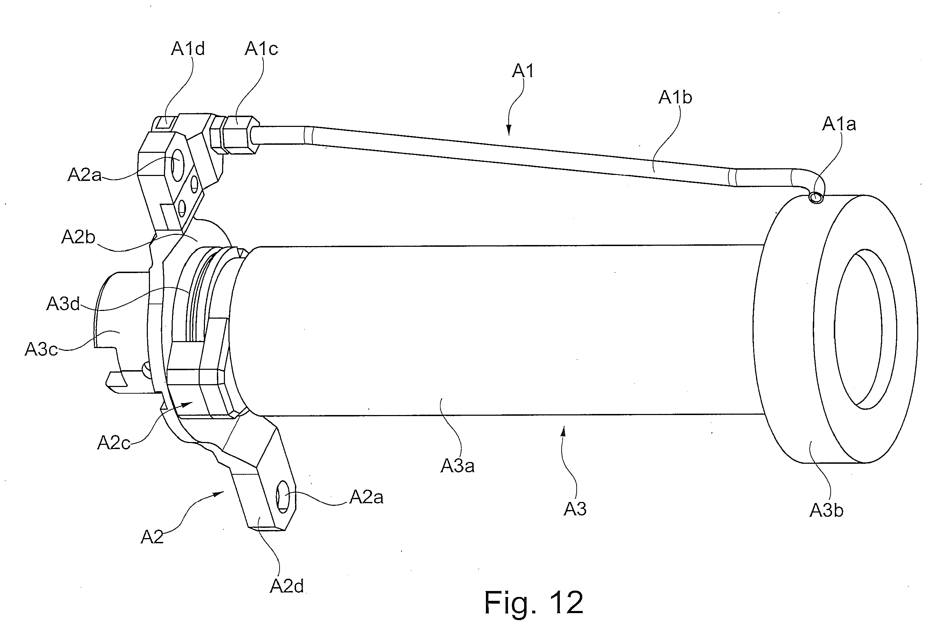

Fig. 12 zeigt ein beispielhaftes Schleifwerkzeug mit einer daran montierten Kühlmittelzufuhreinrichtung. Fig. 12 zeigt das Kombinationswerkzeug A, welches aus dem Schleifwerkzeug A3 und der daran angebrachten Kühlmittelzufuhreinrichtung A2 aufgebaut ist. Die Kühlmittelzufuhreinrichtung A2 umfasst einen Grundkörper A2b, welcher im Zentrum eine Durchlassöffnung aufweist, durch welche der Schaft A3a des Schleifwerkzeugs A3 hindurchgeführt wird.

Zudem weist der Grundkörper A2b radiale Vorsprünge A2d (beiderseitige radiale Kröpfung) auf. Bevorzugt sind die radialen Vorsprünge A2d gegenüberliegend angeordnet, um im angedockten Zustand an den Anschlussring B die Kraftübertragung zu verbessern.

Die radialen Vorsprünge A2d (radiale Kröpfung) weisen Eingreifbohrungen A2a auf, durch welche die Spannmittel B1 des Anschlussrings B hindurch geführt werden können, um den Grundkörper A2b zu fixieren.

Zur schwimmenden Lagerung der Kühlmittelzufuhreinrichtung A2 am Schleifwerkzeug A3 ist das Spannmittel A2c vorgesehen. Das Spannmittel A2c ist in einem Umfangsbereich des Grundkörpers A2b angeordnet.

Der Schaft A3a des Schleifwerkzeugs A3 weist beispielhaft die Führungsnut A3d auf, welche zur schwimmenden Lagerung der Kühlmittelzufuhreinrichtung A2 ein Konturteil A2h führt.

Das Spannmittel A2c weist zudem einen Mechanismus auf, über den ein radiales Fixieren des Schleifwerkzeugs A3 gegenüber der Kühlmittelzufuhreinrichtung A2 erreicht werden kann. Um das Schleifwerkzeug A3 in die Spindel der Werkzeugmaschine bzw. der Fräsmaschine einzuspannen, weist der Schaft A3a des Schleifwerkzeugs A3 eine Schleifwerkzeuganbindung A3c auf. Diese Schleifwerkzeuganbindung A3c kann über eine Nut die Drehbewegung der Werkzeugmaschine in den Schaft A3a einleiten.

Es ist jedoch zu beachten, dass eine derartige Mitnehmernut insbesondere bei Hohlschaftkegel-Werkzeugschnittstellen vorgesehen sein kann. Andere Werkzeugschnittstellen können auch andere bzw. anders ausgebildete Mitnehmerabschnitte aufweisen.

An einer Stirnseite des Schafts A3a ist der Schleifkörper A3b vorgesehen, welcher bevorzugt eine Schleifscheibe ist. Am Schleifkörper A3b ist zudem ein Bearbeitungsbereich A3c vorgesehen, welcher zur Kontaktierung mit einem Werkstück vorgesehen ist.

Auf diesen Bearbeitungsbereich A3c ist die Abgabeöffnung A1a der Kühlmittelzufuhreinrichtung A2 ausgerichtet. Über die Leitungseinheit A1 wird das Kühlmittel von einem Andockzylinder A1d, welcher mit dem Umschaltstück B2 des Anschlussrings B kontaktierbar ist und über welchen die Zufuhr des Kühlschmiermittels in die Leitungseinheit A1 erfolgt, entlang des Längsrohrs A1b bis zur Abgabeöffnung A1a befördert.

Das Kühlschmiermittel wird somit über den Andockzylinder A1d vom Kühlschmiermittelkreislauf der Fräsmaschine (Werkzeugmaschine) hin zur Abgabeöffnung A1a befördert, um die Schleifstelle optimal mit Kühlschmiermittel zu versorgen. Über die Fixierung A1c wird das Längsrohr A1b der Leitungseinheit A1 fixiert.

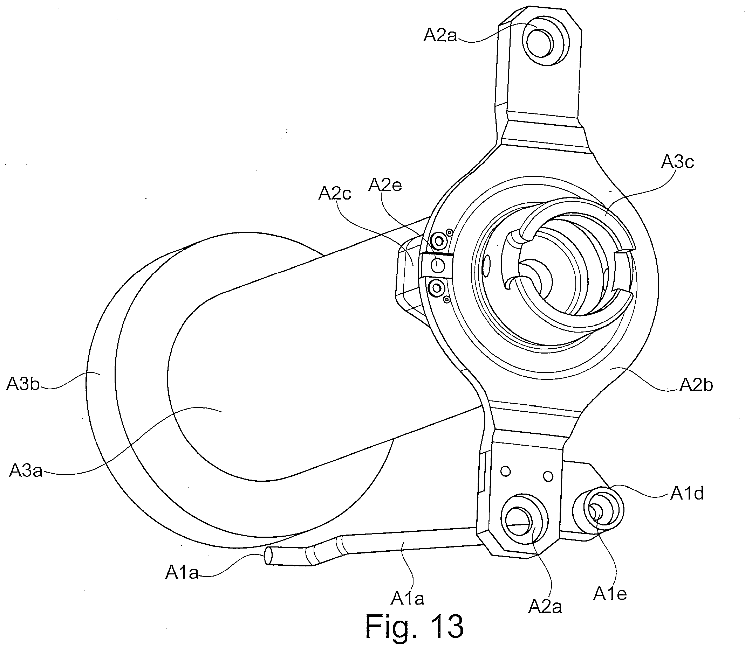

Fig. 13 zeigt eine weitere beispielhafte Darstellung des Schleifwerkzeugs mit der Kühlmittelzufuhreinrichtung.

In Fig. 13 ist das Kombinationswerkzeug A dargestellt. Zur Zufuhr des Kühlschmiermittels zur Abgabeöffnung A1a ist ein Kühlschmierstoffeinlass A1e vorgesehen, welcher im Hohlraum des Andockzylinders A1d angeordnet ist. Der Andockzylinder A1d weist Kontaktflächen auf, welche dazu dienen, die Umschalthülse des Umschaltstücks B2 in den Anschlussring B hineinzupressen, um den Kühlschmierstoff aus dem Anschlussring B anzuzapfen und über das Längsrohr A1b an die Abgabeöffnung A1a weiterzuleiten.

Das Spannmittel A2c weist einen Stößel A2e (Andockelement) auf, welcher bei Kontaktierung des Kombinationswerkzeugs A mit der Bearbeitungseinheit der Werkzeugmaschine in das Spannmittel A2c hineingedrückt wird, um so die radiale Bewegung des Schleifwerkzeugs A3 (also des Schafts A3a und des Schleifkörpers A3b) freizugeben, so dass sich das Schleifwerkzeug A3 unabhängig von der Kühlmittelzufuhreinrichtung A2 drehen kann.

Das Hineinrücken des Stößels A2e in das Spannmittel A2c beim Andocken des Kombinationswerkzeugs A an den Anschlussring B erfolgt dabei über das Kontaktierungselement B10. Das Kontaktierungselement B10 weist bevorzugt eine Zunge auf, welche als steifer Hebel ausgebildet ist. Dieser steife Hebel drückt den Stößel A2e in das Spannmittel A2c, so dass die radiale Bewegung des Schleifwerkzeugs A3 freigegeben werden kann, da sich der Schieber A2g aus der axialen Nut A3e bewegen kann. Dies stellt den vorstehend beschriebenen Spalt ein (siehe Fig. 6).

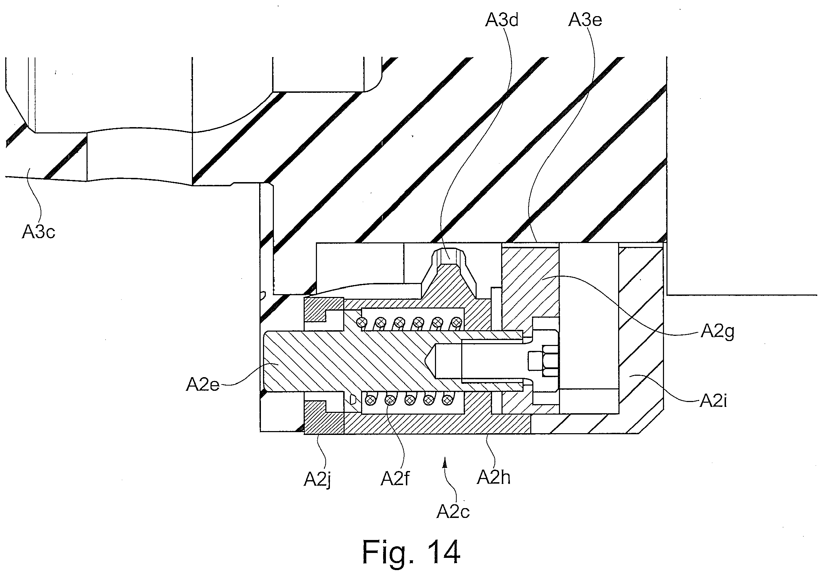

Fig. 14 zeigt eine beispielhafte Detailansicht des Spannmittels der Kühlmittelzufuhreinrichtung.

In Fig. 14 ist eine Schnittdarstellung des Spannmittels A2c dargestellt. Zum Fixieren oder Freigeben des Schafts A3a des Schleifwerkzeugs A3 wird der Stößel A2e entgegen der Feder A2f in das Spannmittel A2c gepresst, um dadurch den mit dem Stößel A2e fest verbundenen Schieber A2g aus einer ersten Nut A3e (axiale Nut) zu bewegen.

Bei Erreichen der Freigabeposition ist der Stößel A2e (Andockelement) soweit in das Spannmittel A2c eingetreten, dass der Schieber A2g vollständig aus der ersten Nut A3e ausgetreten ist und eine Rotation des Schafts A3a ohne Blockierung durch den Schieber A2g möglich wird.

Die schwimmende Lagerung der Kühlmittelzufuhreinrichtung A2 am Schleifwerkzeug A3 wird zudem über das Konturteil A2h erreicht. Das Konturteil A2h weist einen Vorsprung auf, der in eine zweite Nut A3d (radiale Nut) angepasst ist und von dieser in einem geringem Abstand, bevorzugt 0,5 mm, beabstandet ist.

Das Konturteil A2h weist eine Öffnung auf, in welcher die Feder A2f angeordnet ist und durch welche der Stößel A2e hindurchgeführt wird, um über eine Schraubenverbindung mit dem Schieber A2g verbunden zu werden.

Die Seitenwand A2j des Grundkörpers A2b ist mit dem Konturteil A2h verbunden. Bevorzugt wird das Konturteil A2h auf die Seitenwand A2j des Grundkörpers A2d aufgeschraubt und über einen Deckel A2i fixiert.

Fig. 15 zeigt eine beispielhafte Ansicht des Schleifwerkzeugs A3 mit der Kühlmittelzufuhreinrichtung A2 (Kombinationswerkzeug A) in einem Werkzeugmagazin 300 der Werkzeugmaschine.

Das Werkzeugmagazin 300 (nur in Teilansicht gezeigt) ist beispielhaft als Radmagazin ausgebildet, mit einem Rad 320, an dem eine Vielzahl von Werkzeugköchern 309, 310 und 311 angeordnet sind. An dem Werkzeugköcher 310 ist beispielhaft das Schleifwerkzeug A3 mit Kühlmittelzufuhreinrichtung A2 mittels der Werkzeugschnittstelle aufgenommen und gehalten.

Beispielhaft sind hierbei die Eingreifabschnitte der Kühlmittelzufuhreinrichtung A2 über den benachbarten Werkzeugköchern 309 und 311 angeordnet und können dort auch mittels zusätzlicher Zentrierelemente positioniert werden. Diese Werkzeugköcher 309 und 311 werden bevorzugt freigehalten, aber andere Werkzeugköcher des Werkzeugmagazins können herkömmlich mit anderen Werkzeugen versehen sein.

Beispielhaft ist das Schleifwerkzeug A3 mit Kühlmittelzufuhreinrichtung A2 im Vergleich zu der Spannsituation an der Arbeitsspindel um 180° gedreht an dem Werkzeugmagazin gehalten, um bei einer Drehung um 180° mittels eines Greifers einer Werkzeugwechselvorrichtung mit richtiger Orientierung an der Arbeitsspindel eingewechselt zu werden.

Da die Greiferrille der Werkzeugschnittstelle sowohl an der Arbeitsspindel als auch an der Arbeitsspindel stets zumindest auf der der Spanneinrichtung A2c gegenüberliegenden Seite zugreifbar bzw. frei für Zugriff mittels eines Greifers einer Werkzeugwechselvorrichtung ist, kann ein derartiges Kombinationswerkzeug vorteilhaft einfach und zuverlässig mit bisher bekannten Werkzeugwechselvorrichtungen vollautomatisiert ein- und ausgewechselt werden. Vorstehend wurden Beispiele bzw. Ausführungsbeispiele der vorliegenden Erfindung sowie deren Vorteile detailliert unter Bezugnahme auf die beigefügten Figuren beschrieben.

## Patentansprüche

1. Kühlmittelzufuhreinrichtung für ein Schleifwerkzeug zum Einsatz an einer Werkzeugmaschine mit werkzeugtragender Arbeitsspindel, mit
- einem Grundkörper (A2b), der zumindest zwei Eingreifabschnitte (A2a) umfasst,
- einer an dem Grundkörper (A2b) angeordneten Leitungseinheit (A1) mit zumindest einer Abgabeöffnung (A1a) zur Abgabe von Kühlmittel an einen vorbestimmbaren Bearbeitungsbereich an dem Schleifwerkzeug, und
- eine Spanneinrichtung (A2c) zum lösbaren Anbringen der Kühlmittelzufuhreinrichtung (A2) an dem Schleifwerkzeug,
wobei die Kühlmittelzufuhreinrichtung (A2) über die Eingreifabschnitte (A2a) an einem Anschlussring der Arbeitsspindel der Werkzeugmaschine über Spannelemente in den Eingreifabschnitten (A2a) derart ortsfest fixierbar ist, dass ein Spalt zwischen der Kühlmittelzufuhreinrichtung und dem Schleifwerkzeug eingestellt ist, wenn das Schleifwerkzeug an der Arbeitsspindel der Werkzeugmaschine aufgenommen ist.

2. Kühlmittelzufuhreinrichtung nach Anspruch 1, wobei
die Leitungseinheit (A1) einen Kühlmitteleinlass (A1e) aufweist, der mit einer an dem Anschlussring der Arbeitsspindel der Werkzeugmaschine angeordneten Andockeinrichtung zur Zuführung von Kühlmittel andockbar ist, wenn die Kühlmittelzufuhreinrichtung (A2) über die Eingreifabschnitte (A2a) an dem Anschlussring der Arbeitsspindel der Werkzeugmaschine fixiert ist.

3. Kühlmittelzufuhreinrichtung nach Anspruch 1 oder 2, wobei
die Spanneinrichtung (A2c) dazu eingerichtet ist, die Kühlmittelzufuhreinrichtung (A2) an dem Schleifwerkzeug zu fixieren, bevor die Kühlmittelzufuhreinrichtung (A2) über die Eingreifabschnitte (A2a) an dem Anschlussring der Arbeitsspindel der Werkzeugmaschine fixiert wird; und
wobei die Spanneinrichtung (A2c) dazu eingerichtet ist, die Kühlmittelzufuhreinrichtung (A2) aus der Fixierung mit dem Schleifwerkzeug zu lösen, wenn die Kühlmittelzufuhreinrichtung (A2) über die Eingreifabschnitte (A2a) an dem Anschlussring der Arbeitsspindel der Werkzeugmaschine fixiert ist; und wobei, in dem Zustand, in dem die Kühlmittelzufuhreinrichtung (A2) über die Eingreifabschnitte (A2a) an dem Anschlussring der Arbeitsspindel der Werkzeugmaschine fixiert ist und die Leitungseinheit zur Zuführung von Kühlmittel an dem Anschlussring der Arbeitsspindel der Werkzeugmaschine angedockt ist, der Spalt zwischen der Kühlmittelzufuhreinrichtung und dem Schleifwerkzeug derart eingestellt ist, dass das von der Arbeitsspindel rotatorisch angetriebene Schleifwerkzeug ohne Kontakt zur ortsfest an dem Anschlussring der Arbeitsspindel der Werkzeugmaschine fixierten Kühlmittelzufuhreinrichtung (A2) dreht.

4. Kühlmittelzufuhreinrichtung nach einem der vorstehenden Ansprüche, wobei
die Spanneinrichtung einen Schieber (A2g) und ein Andockelement umfasst und wobei
in einer ersten Stellung der Schieber (A2g) in eine erste Nut (A3e) einer Werkzeugschnittstelle des Schleifwerkzeugs eingreift, sodass eine Rotationsbewegung des Schleifwerkzeugs (A3) um den Schaft (A3a) des Schleifwerkzeugs blockiert wird und
zum Lösen der Kühlmittelzufuhreinrichtung (A2), der Schieber (A2g) in einer zweiten Stellung aus der ersten Nut (A3e) austritt, so dass eine Bewegung des Schleifwerkzeugs (A3) um den Schaft (A3a) relativ zur Kühlmittelzufuhreinrichtung (A2) ermöglicht ist.

5. Kühlmittelzufuhreinrichtung nach einem der vorhergehenden Ansprüche, wobei
die Kühlmittelzufuhreinrichtung (A2) eine Kopplungseinrichtung zum Koppeln der Kühlmittelzufuhreinrichtung (A2) an einen Kühlmittelkreis der Werkzeugmaschine aufweist, insbesondere eine mechanisch steuerbare, elektrisch steuerbare, hydraulisch steuerbare und/oder pneumatisch steuerbare Kopplungseinrichtung.

6. Kühlmittelzufuhreinrichtung nach Anspruch 5 mit Anspruch 2, wobei
die Kopplungseinrichtung dazu eingerichtet ist, mit der Andockeinrichtung an dem Anschlussring der Arbeitsspindel der Werkzeugmaschine zu koppeln, insbesondere derart, dass über die Kopplung der Kopplungseinrichtung mit der Andockeinrichtung dem Kühlmitteleinlass (A1e) der Leitungseinheit (A1) Kühlmittel aus dem Kühlmittelkreis des Anschlussrings der Arbeitsspindel zuführbar ist.

7. Schleifwerkzeug zum Einsatz an einer Werkzeugmaschine mit werkzeugtragender Arbeitsspindel, mit
einem Schaft (A3a), einem am Schaft (A3a) vorgesehenen Schleifkörper (A3b) und einer am Schaft (A3b) angeordneten Kühlmittelzufuhreinrichtung (A2) nach einem der vorhergehenden Ansprüche.

8. Schleifwerkzeug nach Anspruch 7, wobei
der Schaft eine Werkzeugschnittstelle zur Aufnahme des Schleifwerkzeugs an der Arbeitsspindel der Werkzeugmaschine aufweist, und
wobei die Kühlmittelzufuhreinrichtung (A2) an der Werkzeugschnittstelle des Schleifwerkzeugs fixierbar ist.

9. Schleifwerkzeug nach einem der Ansprüche 7 bis 8, wobei
die Kühlmittelzufuhreinrichtung (A2) schwimmend am Schleifwerkzeug (A3) gelagert ist,
wobei zur schwimmenden Lagerung der Kühlmittelzufuhreinrichtung (A2) ein Konturteil (A3c) an der Kühlmittelzufuhreinrichtung (A2) vorgesehen ist, welches zur Lagerung in axialer Richtung des Schleifwerkzeugs (A3) in eine zweite Nut (A3d) des Schafts, insbesondere der Werkzeugschnittstelle, des Schleifwerkzeugs (A3) eingreift und zur Lagerung in radialer Richtung der Schieber (A2g) in die erste Nut (A3e) greift.

10. Schleifwerkzeug nach zumindest einem der Ansprüche 7 bis 9, wobei
die Spanneinrichtung in einer Fixierungsposition die Kühlmittelzufuhreinrichtung (A2) am Schaft (A3a) des Schleifwerkzeugs (A3) in radialer Richtung fixiert und in einer Freigabeposition eine Rotation des Schafts (A3a) um eine Längsachse gegenüber der Kühlmittelzufuhreinrichtung (A2) erlaubt.

11. Werkzeugmaschine mit einer werkzeugtragenden Arbeitsspindel, welche eine Werkzeugaufnahme aufweist und ein Anschlussring (B), welcher im Bereich der Werkzeugaufnahme angeordnet ist,
wobei der Anschlussring (B) zumindest ein inneres Leitungssystem für Kühlmittel und eine Spanneinrichtung (B1) zum Einspannen zumindest zweier Eingreifabschnitte (A2a) einer Kühlmittelzufuhreinrichtung (A2) gemäß zumindest einem der Ansprüche 1 bis 6 aufweist, wobei die Kühlmittelzufuhreinrichtung (A2) über die Eingreifabschnitte (A2a) an dem Anschlussring der Arbeitsspindel über die Spannelemente in den Eingreifabschnitten (A2a) derart ortsfest fixierbar ist, dass ein Spalt zwischen der Kühlmittelzufuhreinrichtung und dem Schleifwerkzeug eingestellt ist, wenn das Schleifwerkzeug an der Arbeitsspindel der Werkzeugmaschine aufgenommen ist, und
wobei am Anschlussring (B) ein Umschaltstück (B2) vorgesehen ist zum Umschalten des Kühlmittelflusses vom inneren Leitungssystem des Anschlussrings (B) zu einer Andockeinrichtung zur Kopplung an die Kühlmittelzufuhreinrichtung (A2).

12. Werkzeugmaschine nach Anspruch 11, wobei
die Werkzeugmaschine einen Werkzeugwechsler und ein Werkzeugmagazin umfasst, und der Werkzeugwechsler dazu eingerichtet ist, ein Werkzeug, welches an der Arbeitsspindel eingespannt ist, durch ein Werkzeug aus dem Werkzeugmagazin auszuwechseln,
wobei ein Schleifwerkzeug (A3) gemäß zumindest einem der Ansprüche 7 bis 10 gemeinsam mit der Kühlmittelzufuhreinrichtung (A2) im Werkzeugmagazin aufnehmbar ist und durch den Werkzeugwechsler an der Arbeitsspindel einwechselbar ist.

13. Werkzeugmaschine nach zumindest einem der Ansprüche 11 oder 12, wobei
beim Einspannen des Schleifwerkzeugs (A3) an der Arbeitsspindel durch die Kontaktierung der Kopplungseinrichtung der Kühlmittelzufuhreinrichtung (A2) mit dem Umschaltstück (B2) der Andockeinrichtung des Anschlussrings ein Umschalten des Kühlmittelflusses vom inneren Leitungssystem des Anschlussrings (B) zur Kühlmittelzufuhreinrichtung (A2) bewirkt wird.

14. Werkzeugmaschine nach zumindest einem der Ansprüche 11 bis 13, wobei
zum Andocken der Kühlmittelzufuhreinrichtung (A2) an die Werkzeugmaschine die Spanneinrichtung (B1) des Anschlussrings in die zumindest zwei Eingreifabschnitte (A2a) eingreift und die Kühlmittelzufuhreinrichtung (A2) axial zum Anschlussring (B) herangezogen wird und das Schleifwerkzeug (A3) an der Aufnahme der Arbeitsspindel der Werkzeugmaschine aufgenommen wird, wobei durch das Andocken der Kühlmittelzufuhreinrichtung (A2) und das Aufnehmen des Schleifwerkzeugs (A3) der Spalt zwischen der Kühlmittelzufuhreinrichtung (A2) und dem Schleifwerkzeug (A3) eingestellt wird.

## Claims

1. A coolant supply device for a grinding tool for use on a machine tool including a tool-carrying work spindle, said coolant supply device comprising
- a base body (A2b) comprising at least two engaging portions (A2a),
- a line unit (A1) which is arranged on said base body (A2b) and has at least one discharge opening (A1a) for discharging coolant to a predeterminable machining area on the grinding tool, and
- a clamping device (A2c) for releasably attaching said coolant supply device (A2) to the grinding tool,
wherein said coolant supply device (A2) can be stationarily fixed via said engagement portions (A2a) to a connecting ring of the work spindle of the machine tool via clamping elements in said engagement portions (A2a) in such a way that a gap between the coolant supply device and the grinding tool is set when the grinding tool is received on the work spindle of the machine tool.

2. The coolant supply device according to claim 1, wherein
said line unit (A1) has a coolant inlet (A1e) which can be docked with a docking device arranged on the connecting ring of the work spindle of the machine tool for supplying coolant when said coolant supply device (A2) is fixed to said connecting ring of the work spindle of the machine tool via said engagement portions (A2a).

3. The coolant supply device according to claim 1 or 2, wherein
said clamping device (A2c) is configured to fix said coolant supply device (A2) to said grinding tool before said coolant supply device (A2) is fixed to said connecting ring of the work spindle of the machine tool via said engaging portions (A2a); and
wherein said clamping device (A2c) is configured to release said coolant supply device (A2) from being fixed to the grinding tool when said coolant supply device (A2) is fixed to the connecting ring of the work spindle of the machine tool via said engagement portions (A2a); and
wherein, in the state in which said coolant supply device (A2) is fixed to the connecting ring of the work spindle of the machine tool via said engaging portions (A2a) and the line unit for supplying coolant is docked to the connecting ring of the work spindle of the machine tool, the gap between the coolant supply device and the grinding tool is set in such a way that the grinding tool rotationally driven by the work spindle rotates without contact with said coolant supply device (A2) stationarily fixed to the connecting ring of the work spindle of the machine tool.

4. The coolant supply device according to one of the preceding claims, wherein
the clamping device comprises a slide (A2g) and a docking element and wherein,
in a first position, said slide (A2g) engages in a first groove (A3e) of a tool interface of the grinding tool so that a rotational movement of the grinding tool (A3) around said shaft (A3a) of the grinding tool is blocked, and,
in order to release said coolant supply device (A2), said slide (A2g) exits said first groove (A3e) in a second position so that a movement of the grinding tool (A3) around said shaft (A3a) relative to said coolant supply device (A2) is rendered possible.

5. The coolant supply device according to one of the preceding claims, wherein
said coolant supply device (A2) includes a coupling device for coupling said coolant supply device (A2) to a coolant circuit of the machine tool, in particular a mechanically controllable, electrically controllable, hydraulically controllable and/or pneumatically controllable coupling device.

6. The coolant supply device according to claim 5 with claim 2, wherein
the coupling device is configured to couple with the docking device on the connecting ring of the work spindle of the machine tool, in particular in such a way that coolant from the coolant circuit of the connecting ring of the work spindle can be fed to said coolant inlet (A1e) of said line unit (A1) via the coupling of the coupling device with the docking device.

7. A grinding tool for use on a machine tool including a tool-carrying work spindle, said grinding tool comprising:
a shaft (A3a), a grinding body (A3b) provided on said shaft (A3a) and a coolant supply device (A2) according to one of the preceding claims arranged on said shaft (A3b).

8. The grinding tool according to claim 7, wherein
the shaft includes a tool interface for receiving the grinding tool on the work spindle of the machine tool, and
wherein said coolant supply device (A2) can be fixed to the tool interface of the grinding tool.

9. The grinding tool according to one of claims 7 to 8, wherein
said coolant supply device (A2) is floatingly mounted on the grinding tool (A3),
wherein a contour part (A3c) is provided on said coolant supply device (A2) for the floating support of said coolant supply device (A2), said contour part engaging in a second groove (A3d) of the shaft, in particular the tool interface, of the grinding tool (A3) for supporting the grinding tool (A3) in an axial direction and engaging in said first groove (A3e) for supporting said slides (A2g) in a radial direction.

10. The grinding tool according to at least one of claims 7 to 9, wherein
the clamping device, in a fixing position, fixes said coolant supply device (A2) to said shaft (A3a) of the grinding tool (A3) in the radial direction and, in a release position, allows a rotation of said shaft (A3a) about a longitudinal axis relative to said coolant supply device (A2).

11. A machine tool including a tool-carrying work spindle which comprises a tool holder and a connecting ring (B) arranged in the area of the tool holder,
wherein said connecting ring (B) includes at least one inner line system for coolant and a clamping device (B1) for clamping at least two engaging portions (A2a) of a coolant supply device (A2) according to at least one of claims 1 to 6,
wherein said coolant supply device (A2) can be stationarily fixed via said engagement portions (A2a) to a connecting ring of the work spindle of the machine tool via clamping elements in said engagement portions (A2a) in such a way that a gap between the coolant supply device and the grinding tool is set when the grinding tool is received on the work spindle of the machine tool, and
wherein a switching piece (B2) is provided on said connecting ring (B) for switching the coolant flow from the inner line system of said connecting ring (B) to a docking device for coupling to said coolant supply device (A2).

12. The machine tool according to claim 11, wherein
said machine tool comprises a tool changer and a tool magazine, and the tool changer is configured to replace a tool clamped on the work spindle with a tool from the tool magazine,
wherein a grinding tool (A3) according to at least one of claims 8 to 11 can be received together with said coolant supply device (A2) in the tool magazine and can be inserted at the work spindle by the tool changer.

13. The machine tool according to at least one of claims 11 or 12, wherein,
when the grinding tool (A3) is clamped on the work spindle, the coolant flow is switched from the inner line system of said connecting ring (B) to said coolant supply device (A2) by contacting the coupling device of said coolant supply device (A2) with said switching piece (B2) of the docking device of the connecting ring.

14. The machine tool according to at least one of claims 11 to 13, wherein,
for docking said coolant supply device (A2) to the machine tool, said clamping device (B1) of the connecting ring engages in the at least two engagement portions (A2a) and said coolant supply device (A2) is pulled axially towards said connecting ring (B) and the grinding tool (A3) is received on the receptacle of the work spindle of the machine tool, wherein the gap between said coolant supply device (A2) and the grinding tool (A3) is set by docking said coolant supply device (A2) and receiving the grinding tool (A3).

## Revendications

1. Système d'amenée de réfrigérant pour un outil de rectification destiné à être utilisé sur une machine-outil avec une broche de travail porte-outil, avec
- un corps de base (A2b), qui comprend au moins deux parties d'insertion (A2a),
- une unité de conduite (A1) disposée sur le corps de base (A2b) avec au moins une ouverture de distribution (A1a) pour la distribution de réfrigérant à une zone d'usinage pouvant être prédéfinie sur l'outil de rectification, et
- un système de serrage (A2c) pour le montage libérable du système d'amenée de réfrigérant (A2) sur l'outil de rectification,
dans lequel le système d'amenée de réfrigérant (A2) peut être fixé de manière immobile par l'intermédiaire des parties d'insertion (A2a) sur une bague de raccordement de la broche de travail de la machine-outil par l'intermédiaire d'éléments de serrage dans les parties d'insertion (A2a), de telle sorte qu'une fente entre le système d'amenée de réfrigérant et l'outil de rectification est ajustée lorsque l'outil de rectification est reçu sur la broche de travail de la machine-outil.

2. Système d'amenée de réfrigérant selon la revendication 1, dans lequel
l'unité de conduite (A1) présente une entrée de réfrigérant (A1e), qui peut être amarrée avec un dispositif d'amarrage disposé sur la bague de raccordement de la broche de travail de la machine-outil pour l'amenée de réfrigérant, lorsque le système d'amenée de réfrigérant (A2) est fixé par l'intermédiaire des parties d'insertion (A2a) sur la bague de raccordement de la broche de travail de la machine-outil.

3. Système d'amenée de réfrigérant selon la revendication 1 ou 2, dans lequel
le système de serrage (A2c) est conçu pour fixer le système d'amenée de réfrigérant (A2) sur l'outil de rectification, avant que le système d'amenée de réfrigérant (A2) soit fixé par l'intermédiaire des parties d'insertion (A2a) sur la bague de raccordement de la broche de travail de la machine-outil ; et
dans lequel le système de serrage (A2c) est conçu pour détacher le système d'amenée de réfrigérant (A2) de la fixation avec l'outil de rectification lorsque le système d'amenée de réfrigérant (A2) est fixé par l'intermédiaire des parties d'insertion (A2a) sur la bague de raccordement de la broche de travail de la machine-outil ; et
dans lequel, dans l'état dans lequel le système d'amenée de réfrigérant (A2) est fixé par l'intermédiaire des parties d'insertion (A2a) sur la bague de raccordement de la broche de travail de la machine-outil et l'unité de conduite pour l'amenée de réfrigérant est amarrée sur la bague de raccordement de la broche de travail de la machine-outil, la fente entre le système d'amenée de réfrigérant et l'outil de rectification est ajustée de telle sorte que l'outil de rectification entraîné en rotation par la broche de travail tourne sans contact par rapport au système d'amenée de réfrigérant (A2) fixé de manière immobile sur la bague de raccordement de la broche de travail de la machine-outil.

4. Système d'amenée de réfrigérant selon l'une quelconque des revendications précédentes, dans lequel
le système de serrage comprend un coulisseau (A2g) et un élément d'amarrage et dans lequel
dans une première position le coulisseau (A2g) s'insère dans une première rainure (A3e) d'une interface d'outil de l'outil de rectification, de sorte qu'un mouvement de rotation de l'outil de rectification (A3) autour de la queue (A3a) de l'outil de rectification est bloqué et
pour la libération du système d'amenée de réfrigérant (A2), le coulisseau (A2g) dans une deuxième position sort de la première rainure (A3e), de sorte qu'un mouvement de l'outil de rectification (A3) autour de la queue (A3a) par rapport au système d'amenée de réfrigérant(A2) est permis.

5. Système d'amenée de réfrigérant selon l'une quelconque des revendications précédentes, dans lequel
le système d'amenée de réfrigérant (A2) présente un système d'accouplement pour l'accouplement du système d'amenée de réfrigérant (A2) à un circuit de réfrigérant de la machine-outil, en particulier un système d'accouplement pouvant être commandé mécaniquement, pouvant être commandé électriquement, pouvant être commandé de manière hydraulique et/ou pouvant être commandé de manière pneumatique.

6. Système d'amenée de réfrigérant selon la revendication 5 avec la revendication 2, dans lequel
le système d'accouplement est conçu pour s'accoupler avec le système d'amarrage à la bague de raccordement de la broche de travail de la machine-outil, en particulier de telle sorte que le réfrigérant peut être amené par l'intermédiaire de l'accouplement du système d'accouplement avec le système d'amarrage à l'entrée de réfrigérant (A1e) de l'unité de conduite (A1) à partir du circuit de réfrigérant de la bague de raccordement de la broche de travail.

7. Outil de rectification destiné à être utilisé sur une broche de travail porte-outil, avec
une queue (A3a), un corps de rectification (A3b) prévu sur la queue (A3a) et un système d'amenée de réfrigérant (A2) selon l'une quelconque des revendications précédentes disposé sur la queue (A3b).

8. Outil de rectification selon la revendication 7, dans lequel
la queue présente une interface d'outil pour la réception de l'outil de rectification sur la broche de travail de la machine-outil, et
dans lequel le système d'amenée de réfrigérant (A2) peut être fixé sur l'interface d'outil de l'outil de rectification.

9. Outil de rectification selon l'une quelconque des revendications 7 à 8, dans lequel
le système d'amenée de réfrigérant (A2) est monté de manière flottante sur l'outil de rectification (A3),
dans lequel pour le montage flottant du système d'amenée de réfrigérant (A2) une partie de contour (A3c) est prévue sur le système d'amenée de réfrigérant (A2), laquelle pour le montage dans la direction axiale de l'outil de rectification (A3) s'insère dans une deuxième rainure (A3d) de la queue, en particulier de l'interface d'outil, de l'outil de rectification (A3) et pour le montage dans la direction radiale le coulisseau (A2g) s'insère dans la première rainure (A3e).

10. Outil de rectification selon au moins l'une des revendications 7 à 9, dans lequel
le système de serrage dans une position de fixation fixe le système d'amenée de réfrigérant (A2) sur la queue (A3a) de l'outil de rectification (A3) dans la direction radiale et dans une position de libération permet une rotation de la queue (A3a) autour d'un axe longitudinal par rapport au système d'amenée de réfrigérant (A2).

11. Machine-outil avec une broche de travail porte-outil, laquelle présente un logement d'outil et une bague de raccordement (B), laquelle est disposée dans la zone du logement d'outil,
dans laquelle la bague de raccordement (B) présente au moins un système de conduite interne pour le réfrigérant et un système de serrage (B1) pour le serrage d'au moins deux parties d'insertion (A2a) d'un système d'amenée de réfrigérant (A2) selon l'une quelconque des revendications 1 à 7 et
dans laquelle une pièce de basculement (B2) est prévue sur la bague de raccordement (B) pour le basculement du flux de réfrigérant à partir du système de conduite interne de la bague de raccordement (B) vers un système d'amarrage pour l'accouplement au système d'amenée de réfrigérant (A2).

12. Machine-outil selon la revendication 11, dans laquelle
la machine-outil comprend un changeur d'outil et un magasin d'outils, et le changeur d'outil est conçu pour remplacer un outil, lequel est serré sur la broche de travail, par un outil provenant du magasin d'outils,
dans laquelle un outil de rectification (A3) selon au moins l'une des revendications 8 à 11 peut être reçu conjointement avec le système d'amenée de réfrigérant (A2) dans le magasin d'outils et peut être changé par l'outil de rectification sur la broche de travail.

13. Machine-outil selon au moins l'une des revendications 11 ou 12, dans laquelle
lors du serrage de l'outil de rectification (A3) sur la broche de travail par la mise en contact du système d'accouplement du système d'amenée de réfrigérant (A2) un basculement du flux de réfrigérant à partir du système de conduite interne de la bague de raccordement (B) vers le système d'amenée de réfrigérant (A2) est provoqué avec la pièce de basculement (B2) du système d'amarrage de la bague de raccordement.

14. Machine-outil selon au moins l'une des revendications 11 à 13, dans laquelle
pour l'amarrage du système d'amenée de réfrigérant (A2) à la machine-outil le système de serrage (B1) de la bague de raccordement s'insère dans les au moins deux parties d'insertion (A2a) et le système d'amenée de réfrigérant (A2) est tiré axialement vers la bague de raccordement (B) et l'outil de rectification (A3) est reçu sur le logement de la broche de travail de la machine-outil, dans laquelle la fente entre le système d'amenée de réfrigérant (A2) et l'outil de rectification (A3) est ajustée par l'amarrage du système d'amenée de réfrigérant (A2) et la réception de l'outil de rectification (A3).
